(19) Europäisches Patentamt
European Patent Office
Office européen des brevets

(11) EP 3 502 171 A1

(12) **EUROPÄISCHE PATENTANMELDUNG**

(43) Veröffentlichungstag:
**26.06.2019 Patentblatt 2019/26**

(21) Anmeldenummer: **17209589.5**

(22) Anmeldetag: **21.12.2017**

(51) Int Cl.:
***C08J 5/10*** *(2006.01)*
***B32B 27/36*** *(2006.01)*
***C08K 3/34*** *(2006.01)*
***C08K 5/521*** *(2006.01)*
***C08K 5/523*** *(2006.01)*
***C08K 5/5399*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **MEHRSCHICHTVERBUNDWERKSTOFF ENTHALTEND SPEZIELLE POLYCARBONAT-ZUSAMMENSETZUNGEN ALS MATRIXMATERIAL**

(57) Die vorliegende Erfindung betrifft einen Verbundwerkstoff enthaltend eine oder mehrere Faserlagen aus einem Fasermaterial und einem auf aromatischem Polycarbonat basierenden Matrixmaterial. Die Faserlage(n) ist dabei in dem Matrixmaterial eingebettet. Die vorliegende Erfindung betrifft ferner ein Verfahren zur Herstellung dieser Faserverbundwerkstoffe, Mehrschichtverbundwerkstoffe, umfassend mehrere Lagen Faserverbundwerkstoff, und die Verwendung der Verbundwerkstoffe zur Herstellung von Bau- bzw. Gehäuseteilen oder Gehäusen sowie die Bauteile, Gehäuseteile oder Gehäuse selbst.

EP 3 502 171 A1

## Beschreibung

Die vorliegende Erfindung betrifft einen Faserverbundwerkstoff, enthaltend eine oder mehrere Faserlagen aus einem Fasermaterial und einer auf Polycarbonat basierenden Zusammensetzung als Matrixmaterial, sowie einen Mehrschichtverbundwerkstoff aus mindestens zwei Lagen Faserverbundwerkstoff. Die Faserlage(n) ist/sind dabei in dem Matrixmaterial eingebettet. Die vorliegende Erfindung betrifft ferner ein Verfahren zur Herstellung dieser Faserverbundwerkstoffe bzw. Mehrschichtverbundwerkstoffe sowie die Bauteile bzw. Gehäuseteile aus diesen (Mehrschicht)verbundwerkstoffen.

Faserhaltige Mehrschichtverbundwerkstoffe mit einer auf einem thermoplastischen Kunststoff basierenden Matrix werden sowohl im Folgenden als auch im Stand der Technik als "Organosheets" bezeichnet.

Solche Organosheets weisen gegenüber extrudierten Kunststoffplatten ohne Faserverstärkung eine höhere Festigkeit und Steifigkeit auf und reichen sogar an die Festigkeit und Steifigkeit metallischer Bleche heran bzw. können diese sogar übertreffen. Die Bedeutung derartiger Werkstoffe, z.B. als Gehäuseteile in der Elektro- und IT- Industrie, aber auch in der Automobil- und Flugzeugindustrie, nimmt stetig zu. Diese Verbundwerkstoffe weisen eine hohe Steifigkeit bei gleichzeitig herausragenden mechanischen Eigenschaften auf. Gegenüber herkömmlichen Werkstoffen wie Stahl weisen sie zusätzlich einen deutlichen Gewichtsvorteil auf. Aufgrund der Einsatzbereiche wird gefordert, dass die verwendeten Materialien eine hohe Flammwidrigkeit aufweisen.

Weitere Einsatzbereiche von derartigen Mehrschichtverbundwerkstoffen finden sich in Bereichen, in denen leichte und tragfähige Strukturen benötigt werden. Neben dem schon genannten Automobilsektor - z.B. für Heckklappen, Dachmodule, Türmodule, Montageträger, Frontend- und Heckendgestaltungen, Armaturenträger usw.- und für den Flugzeugbau ist dies der Nutzfahrzeugbau, im Bereich der Schienenfahrzeuge und auch für Dinge des täglichen Bedarfs, wie beispielsweise Haushaltsgeräte.

Ein weiterer Vorteil derartiger Polymer-gestützter Mehrschichtverbundwerkstoffe ist die durch Abwesenheit von Stahl reduzierte bzw. gänzlich ausgeschlossene Korrosionsgefahr.

Es ist bekannt, dass sich Mehrschichtverbundwerkstoffe aus Faserlagen wie Glasfaserlagen oder Kohlefaserlagen in Kombination mit thermoplastischen Materialien herstellen lassen. Als thermoplastische Substratmaterialien eignen sich grundsätzlich eine Vielzahl von Thermoplasten, wie Polyethylen oder Polypropylen, Polyamide, beispielsweise Polyamid 6, Polyamid 6.6, Polyamid 6.12, Polycarbonate, insbesondere aromatische Polycarbonate, basierend auf Bisphenol A, thermoplastische Polyurethane, Polyoxymethylen, Polyphenylenether, Styrolpolymere, beispielsweise Polystyrol, und Styrol enthaltende Copolymere wie Acrylnitril-Butadien-Styrol-Copolymere und Styrol-Acrylnitril-Copolymere, Polytetrafluorethylen, Polyaromaten, beispielsweise Polyphenylensulfid, Polyethersulfon, Polysulfon, Polyetheretherketon, Polyetherimid, Polyacrylat oder Polyamidimid, Polychinoxaline, Polychinoline oder Polybenzimidazole, Polyester wie Polyethylenterephthalat oder Polybutylenterephthalat, Polyacrylnitril oder Polyvinylverbindungen wie Polyvinylchlorid, Polyvinylidenchlorid, Polyvinylester, beispielsweise Polyvinylacetat, Polyvinylalkohole, Polyvinylacetale, Polyvinylether, Polyvinyllactame, Polyvinylamine sowie Mischungen aus den genannten Polymeren.

Die Herstellung Endlosfaser-haltiger Verbundwerkstoffe ist z.B. in EP 2 886 305 A1 beschrieben. Auch der Einsatz von Polycarbonat als Matrixmaterial wird hier genannt.

Ein vorteilhaftes Verfahren zur Herstellung von Faserverbundwerkstoffen ist in der WO 2012/123302 A1 beschrieben. Gemäß dem Verfahren erfolgt nach dem Schmelzauftrag eine Druck-Scher-Vibrationsbeaufschlagung, solange die Roh-Faserverbundwerkstofflage eine Temperatur oberhalb der Glasübergangstemperatur des Polymers hat, wodurch ein wirksames Einarbeiten der Polymerschmelze in die gesamte Faservolumenstruktur der Roh-Faserverbundwerkstofflage erfolgt. Durch die Druck-Scher-Vibrationsbeaufschlagung werden Gasvolumina, die sich noch innerhalb der Roh-Faserverbundwerkstofflage befinden, effizient ausgetrieben.

Es hat sich gezeigt, dass auf Polycarbonat-basierende Zusammensetzungen, die der Fachmann für geeignet als Matrixmaterialien zur Herstellung von Faserverbundwerkstoffen ansehen würde, sich nicht gleichzeitig nach diesem vorteilhaften Verfahren zu Faserverbundwerkstoffen verarbeiten lassen, problematisch hinsichtlich der Schmelzestabilität - Polymerabbau durch thermischen Stress bei der Verarbeitung - sind, und auch nicht zu Mehrschichtverbundwerkstoffen führen, welche gute Flammschutzeigenschaften aufweisen. Solche Polycarbonat-Zusammensetzungen verfügen meistens nicht über ausreichende Imprägniereigenschaften, um einen innigen Verbund zwischen den Fasern der Faserlagen und der Polycarbonatphase zu erreichen. Dieser Effekt wird auch als mangelnde Faserankopplung an die Matrix bezeichnet und führt zu negativen Eigenschaften, wie z. B. erhöhte Sprödigkeit und schlechteren mechanischen Eigenschaften. Weiterhin wird eine erhöhte Staubbildung auf den Oberflächen der Faserverbundwerkstoffe beobachtet, da der (mechanische) Abrieb der Fasern höher ist als bei einer guten Faser-Matrix-Ankopplung. Die genannten Effekte können auch zu schlechteren Flammschutzeigenschaften führen.

Daher bestand die Aufgabe, einen Faserverbundwerkstoff bereitzustellen, dessen Matrixmaterial eine gute Schmelzestabilität aufweist, der die Anforderung UL94-V0 bei 0,7 mm erfüllt, der sich möglichst nach dem in der WO 2012/123302 A1 beschriebenen Verfahren herstellen lässt, und der sich als Gehäusematerial, ggf. als Mehrschichtverbundwerkstoff, für ein Gehäuse eines elektronischen Geräts geeignet ist. Hierfür sollte das Material darüber hinaus

möglichst leichtgewichtig sein und sich möglichst kostengünstig, etwa über das genannte Verfahren, herstellen lassen.

Überraschend wurde gefunden, dass diese Aufgabe durch einen Faserverbundwerkstoff, umfassend mindestens eine Lage Fasermaterial, eingebettet in eine auf aromatischem Polycarbonat basierende Zusammensetzung, enthaltend

A) mindestens 55 Gew.-% mindestens eines aromatischen Polycarbonats,

B) 5 Gew.-% bis 11 Gew.-% mindestens eines Quarzes und/oder Quarzglases,

C) 4 Gew.-% bis 15 Gew.-% mindestens eines cyclischen Phosphazens gemäß Formel (1)

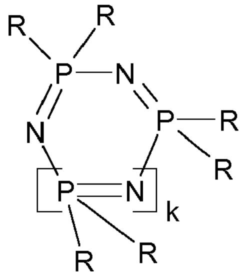

(1),

wobei

R jeweils gleich oder verschieden ist und für einen Aminrest, einen jeweils gegebenenfalls halogenierten $C_1$- bis $C_8$-Alkylrest, $C_1$- bis $C_8$-Alkoxyrest, jeweils gegebenenfalls durch Alkyl und/oder Halogen substituierten $C_5$- bis $C_6$-Cycloalkylrest, jeweils gegebenenfalls durch Alkyl, und/oder Halogen und/oder Hydroxy-substituierten $C_6$- bis $C_{20}$-Aryloxyrest, jeweils gegebenenfalls durch Alkyl, und/oder Halogen substituierten $C_7$- bis $C_{12}$-Aralkylrest oder einen Halogen-Rest oder einen OH-Rest steht,

k für eine ganze Zahl von 1 bis 10 steht,

D) 3 bis 12 Gew.-% mindestens einer Phosphorverbindung der allgemeinen Formel (2)

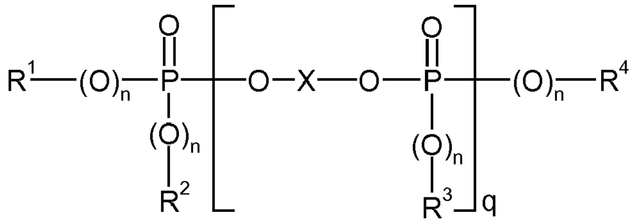

(2),

worin

$R^1$, $R^2$, $R^3$ und $R^4$ unabhängig voneinander für einen $C_1$- bis $C_8$-Alkylrest, jeweils gegebenenfalls halogeniert und jeweils verzweigt oder unverzweigt, und/oder $C_5$- bis $C_6$-Cycloalkylrest, $C_6$- bis $C_{20}$-Arylrest oder $C_7$- bis $C_{12}$-Aralkylrest, jeweils gegebenenfalls durch verzweigtes oder unverzweigtes Alkyl und/oder Halogen substituiert, stehen,

n unabhängig voneinander 0 oder 1,

q einen ganzzahligen Wert von 0 bis 30,

X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann, bedeuten,

E) gegebenenfalls weitere Additive,

gelöst wird.

Hierbei beziehen sich die Angaben in "Gew.-%" jeweils auf die gesamte, auf aromatischem Polycarbonat basierende Zusammensetzung.

Weiterer Gegenstand der vorliegenden Erfindung ist ein Mehrschichtverbundwerkstoff, der mindestens zwei, bevorzugt mindestens drei übereinander liegende Lagen aus einem solchen Faserverbundwerkstoff umfasst, wobei bei drei Lagen diese relativ zueinander definiert werden als zwei außenliegende Lagen Faserverbundwerkstoff und mindestens eine innenliegende Lage Faserverbundwerkstoff. Die Lagen Faserverbundwerkstoff können aus demselben oder aus unterschiedlichem Material der vorbeschriebenen Zusammensetzung bestehen; bevorzugt ist bei allen Lagen das Matrixmaterial dasselbe.

"Mindestens ein/es/e" im Sinne der vorliegenden Erfindung bedeutet, dass die jeweilige Komponente der Zusammensetzung nicht durch eine Verbindung alleine gebildet sein muss, sondern dass es sich auch um eine Mischung zweier oder mehr Komponenten der allgemein definierten Gruppe handeln kann.

**Matrixmaterial**

**Komponente A**

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben bevorzugt mittlere Molekulargewichte $M_w$, bestimmt mittels Gelpermeationschromotographie, von 15.000 g/mol bis 40.000 g/mol, weiter bevorzugt von 18.000 g/mol bis 33.000 g/mol, besonders bevorzugt von 22.000 g/mol bis 32.000 g/mol, ganz besonders bevorzugt von 23.000 bis 25.000 g/mol. Die Kalibrierung erfolgt mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Ein Teil, bis zu 80 Mol-%, vorzugsweise von 5 Mol-% bis zu 50 Mol-%, der Carbonat-Gruppen in den erfindungsgemäß eingesetzten Polycarbonaten können durch aromatische oder aliphatische Dicarbonsäureester-Gruppen ersetzt sein. Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (3)

HO-Z-OH (3),

in welcher

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (3) für einen Rest der Formel (4)

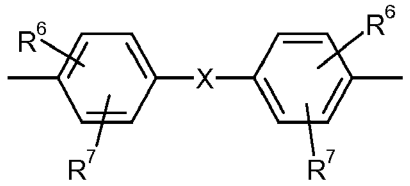

(4),

in der

$R^6$ und $R^7$ unabhängig voneinander für H, $C_1$- bis $C_{18}$-Alkyl-, $C_1$- bis $C_{18}$-Alkoxy, Halogen wie C1 oder Br oder für jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, $-SO_2-$, -CO-, -O-, -S-, $C_1$- bis $C_6$-Alkylen, $C_2$- bis $C_5$-Alkyliden oder $C_5$- bis $C_6$-Cycloalkyliden, welches mit $C_1$- bis $C_6$-Alkyl, vorzugsweise Methyl oder Ethyl, substituiert sein kann, ferner für $C_6$- bis $C_{12}$-Arylen, welches gegebenenfalls mit weiteren Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_5$- bis $C_6$-Cycloalkyliden, -O-, -SO-, -CO-, -S-, $-SO_2$
oder für einen Rest der Formel (5)

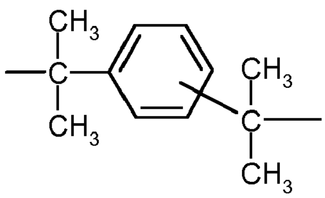

(5).

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate und Copolycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren alkylierte, kernalkylierte und kernhalogenierte Verbindungen. Zur Herstellung von Copolycarbonaten können auch Si-haltige Telechele eingesetzt werden, sodass sogenannte Si-Copolycarbonate erhalten werden.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC) sowie die Bisphenole (I) bis (III)

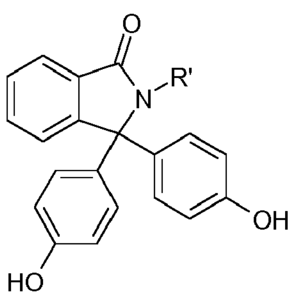

(I)

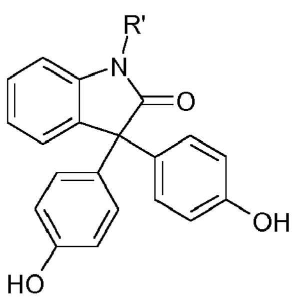

(II)

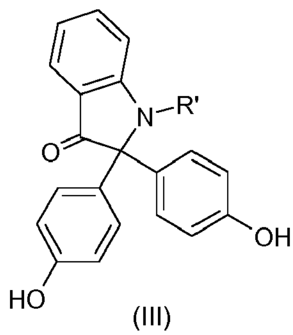

(III)

,

in denen R' jeweils für einen $C_1$- bis $C_4$-Alkylrest, Aralkylrest oder Arylrest, bevorzugt für einen Methylrest oder Phenylrest, ganz besonders bevorzugt für einen Methylrest, steht.

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Diphenole der Formeln (I), (II) und/oder (III).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethyleyelohexan und die Copolycarbonate auf Basis der beiden Monomere Bisphenol A und 1,1-Bis-(4-hydroxyphenyl)-3,3,5-trimethylcyclohexan beziehungsweise der beiden Monomere Bisphenol A und 4,4'-Dihydroxydiphenyl, sowie von den Diphenolen der Formeln (I), (II) und/oder (III)

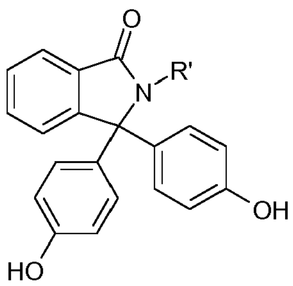
(I)

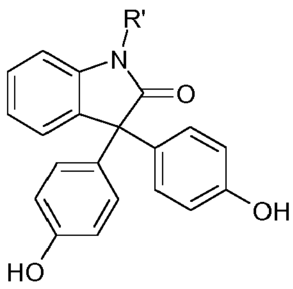
(II)

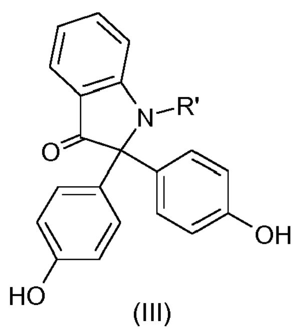
(III) ,

in denen R' jeweils für $C_1$- bis $C_4$-Alkyl, Aralkyl oder Aryl, bevorzugt für Methyl oder Phenyl, ganz besonders bevorzugt für Methyl, steht,

abgeleitete Homo- oder Copolycarbonate, insbesondere mit Bisphenol A.

Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Bevorzugt sind auch Copolycarbonate mit einer oder mehreren Monomereinheiten eines Siloxans der allgemeinen Formel (IV)

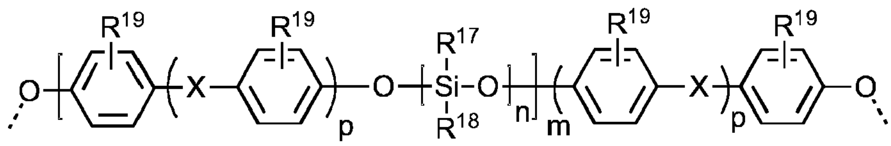
(IV),

in der

$R^{19}$ für Wasserstoff, Cl, Br oder einen $C_1$- bis $C_4$-Alkylrest, vorzugsweise für Wasserstoff oder einen Methylrest, besonders bevorzugt für Wasserstoff, steht,

$R^{17}$ und $R^{18}$ gleich oder verschieden sind und unabhängig voneinander für einen Arylrest, einen $C_1$- bis $C_{10}$-Alkylrest oder einen $C_1$- bis $C_{10}$-Alkylarylrest, bevorzugt jeweils für einen Methylrest, stehen und wobei

X eine Einfachbindung, -CO-, -O-, ein $C_1$- bis $C_6$-Alkylenrest, ein $C_2$- bis Cs-Alkylidenrest, ein $C_5$- bis $C_{12}$-Cycloalkylidenrest oder ein $C_6$- bis $C_{12}$-Arylenrest ist, der optional mit weiteren aromatischen Ringen kondensiert sein kann, welche Heteroatome enthalten, wobei X bevorzugt eine Einfachbindung, ein $C_1$- bis $C_5$-Alkylenrest, ein $C_2$- bis $C_5$-Alkylidenrest, ein $C_5$- bis $C_{12}$-Cycloalkylidenrest, -O- oder -CO- ist, weiter bevorzugt eine Einfachbindung, ein

Isopropylidenrest, ein $C_5$- bis $C_{12}$-Cycloalkylidenrest oder -O- ist, ganz besonders bevorzugt ein Isopropylidenrest, ist,

n eine Zahl von 1 bis 500, vorzugsweise von 10 bis 400, besonders bevorzugt von 10 bis 100, ganz besonders bevorzugt von 20 bis 60, ist,

m eine Zahl von 1 bis 10, bevorzugt von 1 bis 6, besonders bevorzugt von 2 bis 5, ist,

p 0 oder 1, bevorzugt 1, ist,

und der Wert von n mal m vorzugsweise zwischen 12 und 400, weiter bevorzugt zwischen 15 und 200 liegt,

wobei das Siloxan bevorzugt mit einem Polycarbonat in Gegenwart eines organischen oder anorganischen Salzes einer schwachen Säure mit einem $pK_A$ Wert von 3 bis 7 (25°C) umgesetzt wird.

Copolycarbonate mit Monomereinheiten der Formel (IV) und insbesondere auch deren Herstellung sind in der WO 2015/052106 A2 beschrieben.

Der Gesamtanteil der Monomereinheiten der Formeln (I), (II), (III), 4,4'-Dihydroxydiphenyl und/oder Bisphenol TMC im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Diphenole).

Die Copolycarbonate können als block- und statistisches Copolycarbonat vorliegen. Besonders bevorzugt sind statistische Copolycarbonate.

Dabei ergibt sich das Verhältnis der Häufigkeit der Diphenolat-Monomereinheiten im Copolycarbonat aus dem Molverhältnis der eingesetzten Diphenole.

Die relative Lösungsviskosität der Copolycarbonate, bestimmt nach ISO 1628-4:1999, liegt bevorzugt im Bereich von = 1,15 - 1,35.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

"Polycarbonat-Zusammensetzungen" oder auch auf "Polycarbonat basierende Zusammensetzungen", was die erfindungsgemäßen Zusammensetzungen für das Matrixmaterial sind, sind solche Zusammensetzungen, deren Basismaterial, d.h. überwiegend vorhandene Komponente, ein Polycarbonat ist. "Überwiegend" bedeutet hierbei mindestens 55 Gew.-%, bevorzugt mindestens 65 Gew.-%, noch weiter bevorzugt mindestens 70 Gew.-%, besonders bevorzugt bis 82 Gew.-% aromatisches Polycarbonat.

**Komponente B**

Als Komponente B kommen natürlich vorkommende oder synthetisch hergestellte Quarze sowie Quarzglase zum Einsatz, welche möglichst homogen, bevorzugt homogen, in dem Matrixmaterial verteilt sind.

Die in der Erfindung verwendeten Quarze weisen bevorzugt eine sphärische und/oder annähernd sphärische Korngestalt auf. Annähernd sphärisch bedeutet hierbei Folgendes: Sofern die Kugel durch von einem gemeinsamen Ursprung ausgehende, in den Raum gerichtete Achsen gleicher Länge beschrieben wird, wobei die Achsen den Radius der Kugel in alle Raumrichtungen definieren, ist für die sphärischen Partikel eine Abweichung der Achsenlängen vom Idealzustand der Kugel von bis zu 20% möglich, um noch als annähernd sphärisch zu gelten.

Die Quarze sind bevorzugt durch einen mittleren Durchmesser $d_{50}$, bestimmt nach ISO 13320:2009, von 2 bis 10 $\mu$m, weiter bevorzugt von 2,5 bis 8,0 $\mu$m, noch weiter bevorzugt von 3 bis 5 $\mu$m gekennzeichnet, wobei ein oberer Durchmesser $d_{95}$, bestimmt nach ISO 13320:2009, von entsprechend 6 bis 34 $\mu$m, weiter bevorzugt von 6,5 bis 25,0 $\mu$m, noch weiter bevorzugt von 7 bis 15 $\mu$m, und besonders bevorzugt von 10 $\mu$m bevorzugt ist.

Bevorzugt weisen die Quarze eine spezifische BET-Oberfläche, bestimmt durch Stickstoffadsorption gemäß ISO 9277:2010, von 0,4 bis 8,0 $m^2/g$, weiter bevorzugt von 2 bis 6 $m^2/g$, und besonders bevorzugt von 4,4 bis 5,0 $m^2/g$ auf.

Weiter bevorzugte Quarze weisen nur maximal 3 Gew.-% Nebenbestandteile auf, wobei vorzugsweise der Gehalt an

$Al_2O_3$ < 2,0 Gew.-%,

$Fe_2O_3$ < 0,05 Gew.-%,

(CaO + MgO) < 0,1 Gew.-%,

($Na_2O$ + $K_2O$ < 0,1 Gew.-%

ist, jeweils bezogen auf das Gesamtgewicht des Quarzes bzw. Silikats.

Bevorzugt werden Quarze mit einem pH-Wert, gemessen gemäß ISO 10390:2005 in wässriger Suspension, im Bereich 6 bis 9, weiter bevorzugt 6,5 bis 8,0 eingesetzt.

Sie weisen bevorzugt eine Ölabsorptionszahl gemäß ISO 787-5:1980 von bevorzugt 20 bis 30 g/100 g auf.

In bevorzugter Ausführungsform handelt es sich bei Komponente B um feinteilige Quarzmehle, die durch eisenfreie Mahlung mit nachfolgender Windsichtung aus aufbereitetem Quarzsand hergestellt wurden.

Besonders bevorzugt wird "fused Silica" als Komponente B eingesetzt, wobei es sich um Quarzglas handelt, aufgeschmolzenes und wieder erstarrtes Siliciumdioxid.

Besonders bevorzugt kommen Quarze bzw. Quarzglase zum Einsatz, die eine Schlichte an der Oberfläche aufweisen, wobei bevorzugt Epoxy-modifizierte, Polyurethan-modifizierte und nichtmodifizierte Silanverbindungen, Methylsiloxan-, und Methacrylsilan-Schlichten oder Mischungen der vorgenannten Silanverbindungen zum Einsatz kommen. Besonders bevorzugt ist eine Epoxysilanschlichte.

Die Beschlichtung von anorganischen Füllstoffen erfolgt nach den allgemeinen, dem Fachmann bekannten Verfahren.

**Komponente C**

Phosphazene gemäß Komponente C, welche gemäß der vorliegenden Erfindung eingesetzt werden, sind cyclische Phosphazene gemäß Formel (1)

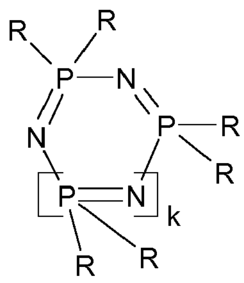

(1),

wobei

R jeweils gleich oder verschieden ist und für

-einen Aminrest,

-einen jeweils gegebenenfalls halogenierten, vorzugsweise mit Fluor halogenierten, weiter bevorzugt monohalogenierten, $C_1$- bis $C_8$-Alkylrest, vorzugsweise Methylrest, Ethylrest, Propylrest oder Butylrest,

-einen $C_1$- bis $C_8$- Alkoxyrest, vorzugsweise einen Methoxyrest, Ethoxyrest, Propoxyrest oder Butoxyrest,

-einen jeweils gegebenenfalls durch Alkyl, vorzugsweise $C_1$- bis $C_4$-Alkyl, und/oder Halogen, vorzugsweise Chlor und/oder Brom, substituierten $C_5$- bis $C_6$-Cycloalkylrest,

-einen jeweils gegebenenfalls durch Alkyl, vorzugsweise $C_1$- bis $C_4$-Alkyl, und/oder Halogen, vorzugsweise Chlor, Brom, und/oder Hydroxy-substituierten, $C_6$- bis $C_{20}$-Aryloxyrest, vorzugsweise Phenoxyrest, Naphthyloxyrest,

-einen jeweils gegebenenfalls durch Alkyl, vorzugsweise $C_1$- bis $C_4$-Alkyl, und/oder Halogen, vorzugsweise Chlor und/oder Brom, substituierten $C_7$- bis $C_{12}$-Aralkylrest, vorzugsweise Phenyl- $C_1$- bis $C_4$-alkylrest, oder

-einen Halogen-Rest, vorzugsweise Chlor oder Fluor, oder

-einen OH-Rest steht,

k für eine ganze Zahl von 1 bis 10, vorzugsweise für eine Zahl von 1 bis 8, besonders bevorzugt 1 bis 5, ganz besonders bevorzugt für 1, steht.

Erfindungsgemäß bevorzugt werden kommerziell erhältliche Phosphazene eingesetzt; bei diesen handelt es sich üblicherweise um Gemische von Cyclen unterschiedlicher Ringgröße.

Bevorzugt sind, sowohl einzeln als auch in Mischung: Propoxyphosphazen, Phenoxyphosphazen, Methylphenoxyphosphazen, Aminophosphazen, Fluoralkylphosphazene sowie Phosphazene der folgenden Strukturen:

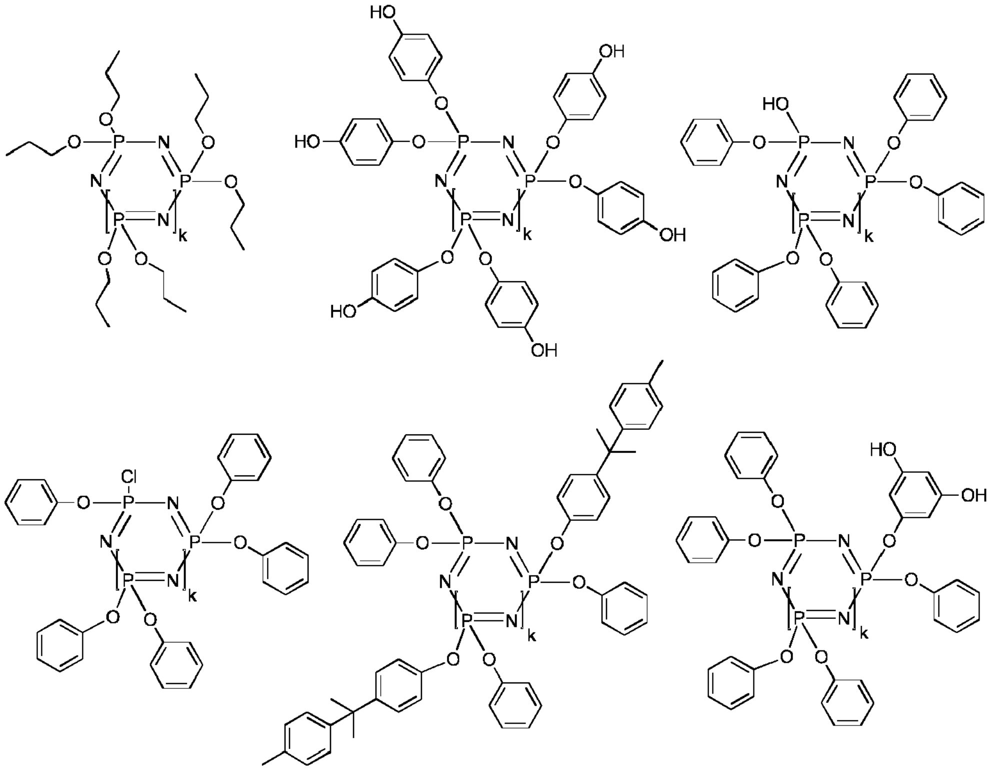

(1a) (1b) (1c)

(1d) (1e) (1f)

In den oben gezeigten Verbindungen ist k = 1, 2 oder 3.

Bevorzugt ist der Anteil von am Phosphor Halogen-substituierten Phosphazenen, z. B. aus unvollständig reagiertem Ausgangsmaterial, kleiner als 1000 ppm, weiter bevorzugt kleiner als 500 ppm.

Die Phosphazene können allein oder als Mischung eingesetzt werden. Der Rest R kann immer gleich sein oder zwei oder mehr Reste in den Formeln können verschieden sein. Bevorzugt sind die Reste R eines Phosphazens identisch.

In einer weiter bevorzugten Ausführungsform werden nur Phosphazene mit gleichem R eingesetzt.

In einer bevorzugten Ausführungsform beträgt der Anteil der Tetramere (k = 2) von 2 bis 50 mol-%, bezogen auf die Komponente C, weiter bevorzugt von 5 bis 40 mol-%, noch weiter bevorzugt von 10 bis 30 mol-%, besonders bevorzugt von 10 bis 20 mol-%.

In einer bevorzugten Ausführungsform beträgt der Anteil der höheren oligomeren Phosphazene (k =3, 4, 5, 6 und 7) von 0 bis 30 mol-%, bezogen auf die Komponente C, weiter bevorzugt von 2,5 bis 25 mol-%, noch weiter bevorzugt von 5 bis 20 mol-%, und besonders bevorzugt von 6 - 15 mol-%.

In einer bevorzugten Ausführungsform beträgt der Anteil der Oligomere mit k≥ 8 von 0 bis 2,0 mol-%, bezogen auf die Komponente C, und bevorzugt von 0,10 bis 1,00 mol-%.

In einer weiter bevorzugten Ausführungsform erfüllen die Phosphazene der Komponente C alle drei zuvor genannten Bedingungen hinsichtlich der Anteile an Oligomeren.

Besonders bevorzugt ist Phenoxyphosphazen (alle R = Phenoxy, Formel 6), alleine oder mit weiteren Phosphazenen gemäß Formel (1) als Komponente C, mit einem Anteil an Oligomeren mit k = 1 (Hexaphenoxyphosphazen) von 50 bis 98 mol-%, besonders bevorzugt 70 bis 72 Gew.-%, bezogen auf die Komponente C. Sofern Phenoxyphosphazen eingesetzt wird, beträgt ganz besonders bevorzugt der Anteil an Oligomeren mit k = 2: 15 bis 20 Gew.-% und mit k ≥ 3: 11 bis 13 Gew.-%.

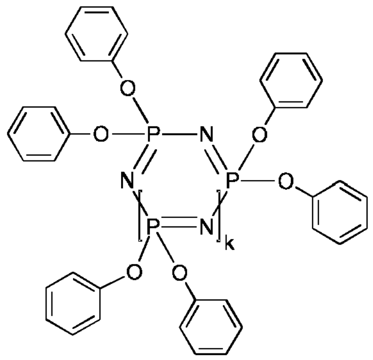

(6)

Alternativ besonders bevorzugt ist die Komponente C ein Phenoxyphosphazen mit einem Trimerenanteil (k = 1) von 70 bis 85 mol-%, einem Tetramerenanteil (k = 2) von 10 bis 20 mol-%, einem Anteil an höheren oligomeren Phosphazenen (k = 3, 4, 5, 6 und 7) von 3 bis 8 mol-% und Phosphazen-Oligomeren mit k≥ 8 von 0,1 bis 1 mol-%, bezogen auf die Komponente C.

In einer alternativen Ausführungsform ist n, definiert als der arithmetische Mittelwert von k, im Bereich von 1,10 bis 1,75, bevorzugt von 1,15 bis 1,50, weiter bevorzugt von 1,20 bis 1,45, und besonders bevorzugt von 1,20 bis 1,40 (Bereichsgrenzen eingeschlossen).

$$n = \frac{\sum_{i=1}^{max} \mathrm{k_i} \cdot \mathrm{x_i}}{\sum_{i=1}^{max} \mathrm{x_i}}$$

Die Phosphazene und deren Herstellung sind beispielsweise in EP 728 811 A2, DE 1961668 A und WO 97/40092 A1 beschrieben.

Die Oligomer-Zusammensetzungen in den jeweiligen Blendproben lassen sich auch nach Compoundieren mittels $^{31}$P-NMR nachweisen und quantifizieren (chemische Verschiebung; $\delta$ trimer: 6,5 bis 10,0 ppm; $\delta$ tetramer: -10 bis -13,5 ppm; $\delta$ höhere Oligomere: -16,5 bis -25,0 ppm).

Die erfindungsgemäß eingesetzten, auf Polycarbonat basierenden Zusammensetzungen enthalten 4 Gew.-% bis 15 Gew.-%, bevorzugt 4,5 Gew.-% bis 12 Gew.-% cyclisches Phosphazen, besonders bevorzugt 5 Gew.-% bis 10 Gew.-%, ganz besonders bevorzugt 8 Gew.-% bis 10 Gew.-%.

**Komponente D**

Komponenten D sind Phosphorverbindungen der allgemeinen Formel (2)

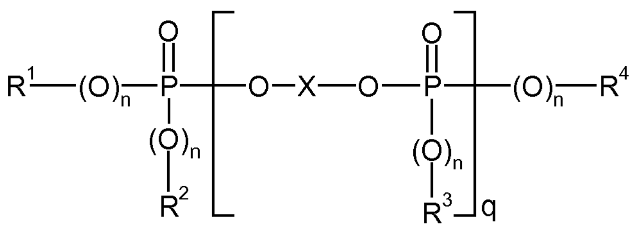

(2),

worin

$R^1$, $R^2$, $R^3$ und $R^4$ unabhängig voneinander für einen $C_1$- bis $C_8$-Alkylrest, jeweils gegebenenfalls halogeniert und jeweils verzweigt oder unverzweigt, und/oder $C_5$- bis $C_6$-Cycloalkylrest, $C_6$- bis $C_{20}$-Arylrest oder $C_7$- bis $C_{12}$-Aralkylrest, jeweils gegebenenfalls durch verzweigtes oder unverzweigtes Alkyl und/oder Halogen substituiert, stehen,

n unabhängig voneinander 0 oder 1,

q einen ganzzahligen Wert von 0 bis 30 und

X einen ein- oder mehrkernigen aromatischen Rest mit 6 bis 30 C-Atomen, oder einen linearen oder verzweigten

aliphatischen Rest mit 2 bis 30 C-Atomen, der jeweils substituiert oder unsubstituiert, verbrückt oder unverbrückt sein kann, bedeuten.

Bevorzugt stehen $R^1$, $R^2$, $R^3$ und $R^4$ unabhängig voneinander für verzweigtes oder unverzweigtes $C_1$-bis $C_4$-Alkyl, Phenyl, Naphthyl oder mit $C_1$- bis $C_4$-Alkyl substituiertes Phenyl. Im Falle aromatischer Gruppen $R^1$, $R^2$, $R^3$ und/oder $R^4$ können diese ihrerseits mit Halogen- und/oder Alkylgruppen, vorzugsweise Chlor, Brom und/oder $C_1$- bis $C_4$-Alkyl, verzweigt oder unverzweigt, substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (2) leitet sich bevorzugt von Diphenolen ab. X in Formel (2) steht besonders bevorzugt für

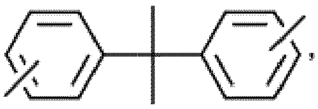, 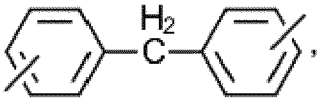,

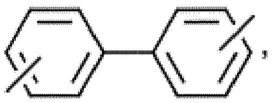, 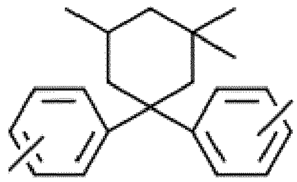

(Xi) (Xii)

(Xiii) (Xiv)

oder deren chlorierte und/oder bromierte Derivate. Bevorzugt leitet sich X (mit den angrenzenden Sauerstoffatomen) von Hydrochinon, Bisphenol A oder Diphenylphenol ab. Ebenfalls bevorzugt leitet sich X von Resorcin ab. Besonders bevorzugt leitet sich X von Bisphenol A ab.

n in der Formel (2) ist vorzugsweise gleich 1.

q steht bevorzugt für 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00 und besonders bevorzugt von 1,08 bis 1,60.

Als Phosphorverbindung der allgemeinen Formel (2) ist eine Verbindung der Formel (2a) bevorzugt:

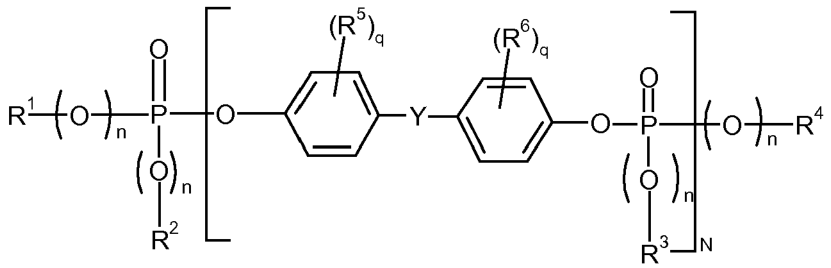

(2a),

worin

$R^1$, $R^2$, $R^3$ und $R^4$ jeweils unabhängig voneinander einen linearen oder verzweigten $C_1$- bis $C_8$-Alkylrest und/oder gegebenenfalls durch lineares oder verzweigtes Alkyl-substituierten $C_5$- bis $C_6$-Cycloalkylrest, $C_6$- bis $C_{10}$-Arylrest oder $C_7$- bis $C_{12}$-Aralkylrest,

n unabhängig voneinander 0 oder 1,

q unabhängig voneinander 0, 1, 2, 3 oder 4,

N eine Zahl zwischen 1 und 30,

$R_5$ und $R_6$ unabhängig voneinander einen linearen oder verzweigten $C_1$- bis $C_4$-Alkylrest, vorzugsweise Methylrest, und

Y lineares oder verzweigtes $C_1$- bis $C_7$-Alkyliden, einen linearen oder verzweigten $C_1$- bis $C_7$-Alkylenrest, $C_5$- bis $C_{12}$-Cycloalkylenrest, $C_5$- bis $C_{12}$-Cycloalkylidenrest, -O-, -S-, -SO-, $SO_2$ oder -CO- bedeuten.

Phosphorverbindungen der Formel (2) sind insbesondere Tributylphosphat, Triphenylphosphat, Trikresylphosphat, Diphenylkresylphosphat, Diphenyloctylphosphat, Diphenyl-2-ethyl-kresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (2), die sich vom Bisphenol A ableiten, ist insbesondere bevorzugt.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung des Phosphorverbindungsgemisches (Molekulargewichtsverteilung) bestimmt wird und daraus die Mittelwerte für q berechnet werden.

Besonders bevorzugt sind Oligophosphate der Formel (2b), bei denen q zwischen 0 und 5, ganz besonders bevorzugt bevorzugt zwischen 1,0 und 1,2 liegt.

Höchst bevorzugt als Komponente D ist Bisphenol-A basierendes Oligophosphat gemäß Formel (2b) mit q = 1,1.

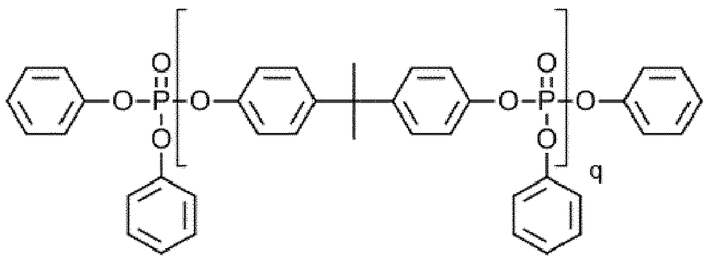

(2b)

Die Phosphorverbindungen gemäß Komponente D sind bekannt (vgl. z.B. EP 0 363 608 A1, EP 0 640 655 A2) oder lassen sich nach bekannten Methoden in analoger Weise herstellen (z.B. Ullmanns Enzyklopädie der technischen Chemie, Bd. 18, S. 301 ff., 1979; Houben-Weyl, Methoden der organischen Chemie, Bd. 12/1, S. 43; Beilstein Bd. 6, S. 177).

Die erfindungsgemäß eingesetzten Zusammensetzungen enthalten 3 bis 12 Gew.-%, bevorzugt 4 bis 11 Gew.-%, weiter bevorzugt 5 bis 10 Gew.-%, noch weiter bevorzugt 8 bis 10 Gew.-%, Phosphorverbindung gemäß Komponente D, ganz besonders bevorzugt Bisphenol-A basierendes Oligophosphat gemäß Formel (2b), insbesondere mit q = 1,0 bis 1,2, bezogen auf die Gesamtzusammensetzung.

**Komponente E**

Neben dem Polycarbonat können die Zusammensetzungen noch übliche Additive wie Flammschutzmittel, Antitropfmittel, Thermostabilisatoren, UV-Stabilisatoren, IR-Stabilisatoren, Antioxidantien, Entformungsmittel, Fließhilfsmittel, Antistatika, Schlagzähmodifikatoren, Farbmittel und/oder Füllstoffe als weitere Additive enthalten. Geeignete übliche Additive für Polycarbonatzusammensetzungen sind beispielsweise beschrieben im "Additives for Plastic Handbook", John Murphy, Elsevier, Oxford 1999 oder im "Plastics Additives Handbook", Hans Zweifel, Hanser, München 2001.

"Weitere Additive" sind kein cyclisches Phosphazen gemäß Formel (1) und keine Phosphorverbindung der allgemeinen Formel (2), da diese bereits als die Komponenten B und C beschrieben sind.

Die erfindungsgemäß verwendeten Zusammensetzungen können als weiteres Flammschutzmittel mindestens ein organisches Flammschutzsalz, ausgewählt aus der Gruppe, bestehend aus Alkali- und/oder Erdalkalisalzen von aliphatischen und aromatischen Sulfonsäure-, Sulfonamid- und/oder Sulfonimidderivaten enthalten, besonders bevorzugt in einer Menge bis 1 Gew.-%, ganz besonders bevorzugt in einer Menge bis 0,2 Gew.-%. Bevorzugt werden Natrium- oder Kaliumperfluorbutansulfat, Natrium- oder Kaliumperfluoroctansulfat, Natrium- oder Kaliumdiphenylsulfonsulfonat eingesetzt. Weiter bevorzugt sind Kalium-nona-fluor-1-butansulfonat und Natrium- oder Kaliumdiphenylsulfonsulfonat. Kalium-nona-fluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutansulfonylfluorid FC-51 (Firma 3M, USA) kommerziell erhältlich. Ebenfalls sind Mischungen der genannten Salze geeignet. Kalium-nona-fluor-1-butansulfonat wird besonders bevorzugt eingesetzt.

Bevorzugt enthalten die erfindungsgemäßen Zusammensetzungen daneben keine weiteren Flammschutzmittel. Vorzugsweise enthalten die erfindungsgemäßen Zusammensetzungen höchstens 0,1 Gew.-% an Fluor-haltigen Antitropfmitteln, weiter bevorzugt sind die erfindungsgemäßen Zusammensetzungen frei von Fluor enthaltenden Antitropfmitteln, etwa von PTFE (Polytetrafluorethylen) oder gecoatetem PTFE/SAN (Styrol-Acrylnitril).

Die Zusammensetzungen für das Matrixmaterial enthalten bevorzugt keinen Talk. Besonders bevorzugt enthalten sie neben Komponente B überhaupt keine weiteren Füllstoffe.

Die Menge an weiteren Additiven beträgt 0 bis 10 Gew.-%, bevorzugt bis zu 5 Gew.-%, besonders bevorzugt 0,01 bis 3 Gew.-%, bezogen auf die Gesamtzusammensetzung.

Die Herstellung der Polycarbonat-Zusammensetzungen, enthaltend die Komponenten A bis D und ggf. E, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Polycarbonaten verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können Additive der erfindungsgemäßen Zusammensetzung durch bekannte Verfahren oder als Masterbatch in das Polycarbonat eingebracht werden.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

**Fasermaterial**

Der chemische Aufbau der Fasern des Fasermaterials kann von der unterschiedlichsten Art sein. Die Fasermaterialien besitzen einen höheren Erweichungs- bzw. Schmelzpunkt als das jeweils vorliegende thermoplastische Matrixmaterial.

Das eingesetzte Fasermaterial ist bevorzugt mit geeigneten Schlichten beschichtet.

Das Fasermaterial liegt bevorzugt als Gewebe, Gewirke oder als Endlosfasern, ganz besonders bevorzugt als Endlosfasern, vor. Das Fasermaterial sind erfindungsgemäß bevorzugt Mahlfasern oder Schnittglasfasern. "Liegt vor" bedeutet hierbei, dass es auch eine Mischung mit anderen Fasermaterialien sein kann. Bevorzugt ist das jeweilige Fasermaterial aber das einzige Fasermaterial.

Der Begriff "Endlosfaser" ist im Sinne der Erfindung als Abgrenzung zu den dem Fachmann ebenfalls bekannten Kurz- oder Langfasern zu verstehen. Endlosfasern erstrecken sich in der Regel über die gesamte Länge der Lage Faserverbundwerkstoff. Der Begriff Endlosfaser leitet sich davon ab, dass diese Fasern auf einer Rolle aufgewickelt vorliegen und während der Herstellung der einzelnen Faserverbundwerkstofflagen abgewickelt und mit Kunststoff imprägniert werden, so dass, mit Ausnahme von gelegentlichem Bruch oder Rollenwechsel, ihre Länge üblicherweise im Wesentlichen mit der Länge der hergestellten Faserverbundwerkstofflage übereinstimmt.

Beispiele für Fasermaterialien sind anorganische Materialien wie silikatische und nichtsilikatische Gläser der verschiedensten Art, Kohlenstoff, Basalt, Bor, Siliciumcarbid, Metalle, Metalllegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyamide, Polyimide, Aramide, flüssigkristalline Polymere, Polyphenylensulfide, Polyetherketone, Polyetheretherketone, Polyetherimide. Bevorzugt sind hochschmelzende Materialien, beispielsweise Gläser, Kohlenstoff, Aramide, Basalt, Liquid-crystal-Polymere, Polyphenylensulfide, Polyetherketone, Polyetheretherketone und Polyetherimide. Besonders bevorzugte Fasermaterialien sind Glasfasern oder Carbonfasern, als Endlosfasern sowie als Gewebe und Gewirke, besonders bevorzugt sind Endlosglasfasern oder Endloscarbonfasern. Die Endlosfasern erstrecken sich dabei insbesondere im Wesentlichen über die gesamte Länge der Lage Faserverbundwerkstoff.

Unidirektional im Sinne der Erfindung bedeutet, dass die Endlosfasern im Wesentlichen unidirektional ausgerichtet sind, also der Länge nach in eine Richtung zeigen und damit die gleiche Laufrichtung aufweisen. Mit "im Wesentlichen unidirektional" ist hier gemeint, dass eine Abweichung der Faserlaufrichtung von bis zu 5% möglich ist. Bevorzugt beträgt die Abweichung der Faserlaufrichtung jedoch deutlich unter 3%, besonders bevorzugt deutlich unter 1%.

Unter einer Lage Fasermaterial, auch als Faserlage bezeichnet, wird eine flächige Lage verstanden, welche durch im Wesentlichen in einer Fläche angeordnete Fasern gebildet wird. Die Fasern können durch ihre Lage zueinander miteinander verbunden sein, beispielsweise durch eine gewebeartige Anordnung der Fasern. Weiterhin kann die Faserlage auch einen Anteil Harz oder einen anderen Kleber aufweisen, um die Fasern miteinander zu verbinden. Die

Fasern können alternativ auch unverbunden sein. Hierunter wird verstanden, dass die Fasern ohne Aufwendung einer nennenswerten Kraft voneinander gelöst werden können. Die Faserlage kann auch eine Kombination von verbundenen und unverbundenen Fasern aufweisen. Mindestens eine Seite der Faserlage ist in die erfindungsgemäß eingesetzten auf Polycarbonat basierenden Zusammensetzungen als Matrixmaterial eingebettet. Hierunter wird verstanden, dass die Faserlage zumindest einseitig, vorzugsweise beidseitig von der auf Polycarbonat basierenden Zusammensetzung umgeben ist. Der äußere Rand des Faserverbundwerkstoffes bzw. des Mehrschichtverbundwerkstoffes wird bevorzugt durch die Matrix aus Polycarbonat basierter Zusammensetzung gebildet.

**Bevorzugte Eigenschaften des Verbundwerkstoffes**

Im Falle von Endlosfasern als Fasermaterial können die innenliegenden Lagen Faserverbundwerkstoff im Wesentlichen gleich orientiert und ihre Orientierung relativ zu den außenliegenden Lagen Faserverbundwerkstoff um 30° bis 90° rotiert sein, wobei die Orientierung einer Lage Faserverbundwerkstoff durch die Orientierung der darin enthaltenen, unidirektional ausgerichteten Fasern bestimmt wird.

In einer bevorzugten Ausführungsform sind die Lagen alternierend angeordnet. Hierbei liegen die äußeren Lagen in einer 0° Orientierung vor. Als besonders praxisgerecht hat es sich erwiesen, wenn die innenliegenden Lagen Faserverbundwerkstoff gleich orientiert sind und ihre Orientierung relativ zu den außenliegenden Lagen Faserverbundwerkstoff um 90° rotiert ist. Es ist aber auch möglich, die innenliegenden Lagen relativ zu den außenliegenden Lagen um 30°, 40°, 50°, 60°, 70° oder 80° zu rotieren. Dabei kann die Orientierung in jedem Fall um $\pm 5°$, bevorzugt um $\pm 3°$, besonders bevorzugt um $\pm 1°$ von den genannten Richtwerten abweichen. "Alternierend" heißt, dass die innenliegenden Lagen jeweils um einen Winkel von 90 ° oder einem Winkel von 30° bis 90° abwechselnd angeordnet sind. Die äußeren Lagen liegen in einer 0° Orientierung jeweils vor. Die Winkel können pro Lage jeweils von 30° bis 90° variiert werden.

Eine weitere bevorzugte Ausführungsform ist, dass mindestens ein Teil der Lagen die gleiche Orientierung aufweist und mindestens ein anderer Teil der Lagen um 30° bis 90° rotiert ist. Hierbei liegen die äußeren Lagen in einer 0° Orientierung vor.

Eine weitere bevorzugte Ausführungsform ist, dass die innenliegenden Lagen die gleiche Orientierung aufweisen und ihre Orientierung relativ zu den außenliegenden Lagen Faserverbundwerkstoff um 30° bis 90° rotiert ist und die äußeren Lagen dazu in einer 0° Orientierung vorliegen.

Diese bevorzugten Ausführungsformen sind insbesondere für Endlosfasern geeignet.

Im Falle von Geweben erfolgt ein Stapeln der Lagen Faserverbundwerkstoffe abwechselnd in Kettrichtung (0°) und Schussrichtung (90°) bzw. in den oben angegebenen Winkeln.

In besonderen Ausführungsformen umfasst der Mehrschichtverbundwerkstoff sechs, vorzugsweise fünf, insbesondere vier, besonders bevorzugt drei, innenliegende Lagen Faserverbundwerkstoff. Der erfindungsgemäße Mehrschichtverbundwerkstoff kann aber auch zwei oder mehr als sechs, beispielsweise sieben, acht, neun, zehn oder mehr als zehn innenliegende Faserverbundwerkstofflagen umfassen.

Die Zahl der Faserlagen in einer Lage Faserverbundwerkstoff ist grundsätzlich nicht beschränkt. Es können daher auch zwei oder mehr Faserlagen übereinander angeordnet werden. Zwei übereinanderliegende Faserlagen können dabei jeweils einzeln in das Matrixmaterial eingebettet sein, so dass sie jeweils beidseitig von dem Matrixmaterial umgeben sind. Weiterhin können zwei oder mehr Faserlagen auch unmittelbar übereinander liegen, so dass ihre Gesamtheit von dem Matrixmaterial umgeben wird. In diesem Fall können diese zwei oder mehr Faserlagen auch als eine dicke Faserlage angesehen werden. Bei einer Ausführungsform des Faserverbundwerkstoffs ist die Faserlage als unidirektionale Faserlage, als Gewebe- oder Gelegelage, als Gestrick, Gewirk oder Geflecht, oder als Langfaser in Form von Wirrfasermatten oder Vliesen oder als Kombination daraus ausgebildet.

Eine bevorzugte Ausführungsform eines erfindungsgemäßen Mehrschichtverbundwerkstoffes umfasst acht Schichten und somit zwei außenliegende und sechs innenliegende Schichten. Die innenliegenden Schichten umfassen als Fasermaterial unidirektional orientierte Endlosfasern, bevorzugt Carbonfasern. Dabei weisen die zwei äußeren Schichten der innenliegenden Schichten eine 0°-Orientierung auf. Die vier inneren Schichten der innenliegenden Schichten weisen alle dieselbe Orientierung auf und sind hierzu um 90° rotiert. Als außenliegende Lage ist jeweils eine Lage Verbundwerkstoff aufgebracht, welche anstelle von unidirektional orientierten Endlosfasern ein Fasergewebe enthält. Das Matrixmaterial der innenliegenden Lagen des Verbundwerkstoffes ist eine Zusammensetzung, wie vorstehend beschrieben, insbesondere eine der als bevorzugt herausgehobenen. Besonders bevorzugt ist das Matrixmaterial aller Lagen Faserverbundwerkstoff mit Endlosfasern das gleiche. Der Faservolumengehalt in den sechs innenliegenden Lagen Verbundwerkstoff beträgt bevorzugt 40-50 Vol.-% und ist besonders bevorzugt in diesen Lagen gleich.

Die erfindungsgemäßen Mehrschichtverbundwerkstoffe können ein metallisches Aussehen, metallischen Klang und metallische Haptik und metallähnliche mechanische Eigenschaften aufweisen. Die erfindungsgemäßen Mehrschichtverbundwerkstoffe weisen ferner den Vorteil auf, dass sie sich kostengünstig herstellen lassen und durch den darin verwendeten Kunststoff äußerst leichtgewichtig sind. Vorteilhaft an den erfindungsgemäßen Mehrschichtverbundwerkstoffen ist ferner, dass die Gestaltung, beispielsweise eines Gehäuseteils, durch die Thermoformbarkeit der Mehrschichtverbundwerkstoffe besonders einfach und flexibel erfolgen kann.

Gemäß einer besonderen Ausführungsform der Erfindung sind alle Faserverbundwerkstofflagen des Mehrschichtverbundwerkstoffs flächig miteinander verbunden, wobei das Fasermaterial innerhalb der jeweiligen Lage unidirektional ausgerichtet ist und im Matrixmaterial eingebettet ist. Optional können sich in dieser Ausführungsform weitere Materiallagen, wie z.B. Veredelungsschichten, beispielsweise Lackschichten, üblicherweise auf Basis von Urethanbasierten und Acrylat-basierten Lacksystemen, einschichtig oder mehrschichtig, die thermisch oder mittels UV-Strahlung ausgehärtet werden können (ggf. können die Oberflächen vor Veredelung entsprechend vorbehandelt, aktiviert z.B. mittels Plasmabehandlung oder Beflammung - bzw. gereinigt werden), zwischen den Lagen des Faserverbundwerkstoff befinden. Auf einen Mehrlagenaufbau aus mehreren Lagen Verbundwerkstoff mit jeweils unidirektional orientierten Fasern als Fasermaterial können auf eine oder beide Seiten auch dünne Folien appliziert werden, um eine besonders homogene Oberfläche für eine nachfolgende Lackierung bereitzustellen. Diese Folien können flammwidrig oder auch nicht flammwidrig ausgerüstet sein.

Bei einer weiteren bevorzugten Ausführungsform ist als Außenlage Furnier, auf einer oder auf beiden Seiten des Mehrlagenaufbaus, aufgebracht.

Grundsätzlich kann der erfindungsgemäße Mehrschichtverbundwerkstoff neben den Lagen Faserverbundwerkstoff auch noch eine oder mehrere weitere Lagen enthalten. Beispielhaft seien hier weitere Lagen aus Kunststoff, der gleich oder verschieden von der in den Lagen Faserverbundwerkstoff verwendeten Kunststoffmatrix sein kann, genannt. Diese Kunststofflagen können insbesondere auch Füllstoffe, die von den erfindungsgemäß vorgesehenen Fasermaterialien verschieden sind, enthalten. Ferner können auch Klebstoff-, Gewebe-, Vlies- oder Oberflächenvergütungslagen, beispielsweise Lackschichten, im erfindungsgemäßen Mehrschichtverbundwerkstoff enthalten sein. Diese weiteren Lagen können zwischen innen- und außenliegenden Lagen Faserverbundwerkstoff, zwischen mehreren innenliegenden Lagen Faserverbundwerkstoff und/oder auf einer oder beiden der außenliegenden Lagen Faserverbundwerkstoff enthalten sein. Vorzugsweise sind die außenliegenden und die mindestens eine innenliegende Lage Faserverbundwerkstoff jedoch derart miteinander verbunden, dass keine weiteren Lagen dazwischenliegen.

Der Mehrschichtverbundwerkstoff kann auch ausschließlich aus erfindungsgemäßen Faserverbundwerkstofflagen, bei denen die Fasern innerhalb der jeweiligen Lage unidirektional ausgerichtet sind und in eine auf Polycarbonat basierende Kunststoffmatrix eingebettet sind, bestehen, wobei optional noch auf einer oder beiden der außenliegenden Lagen Faserverbundwerkstoff eine oder mehrere Oberflächenvergütungslagen, beispielsweise Lackschichten, vorhanden sein können.

Die einzelnen Lagen Faserverbundwerkstoff können im Wesentlichen gleich oder unterschiedlich aufgebaut und/oder orientiert sein.

Unter einem im Wesentlichen gleichen Aufbau der Lagen Faserverbundwerkstoff wird im Rahmen der Erfindung verstanden, dass mindestens ein Merkmal aus der Gruppe chemische Zusammensetzung, Faservolumengehalt und Schichtdicke gleich ist.

Unter chemischer Zusammensetzung wird die chemische Zusammensetzung der Kunststoffmatrix des Faserverbundwerkstoffs und/oder die chemische Zusammensetzung des Fasermaterials wie Endlosfasern verstanden.

Gemäß einer bevorzugten Ausführungsform der Erfindung sind die außenliegenden Lagen Faserverbundwerkstoff in Bezug auf ihre Zusammensetzung, ihren Faservolumengehalt und ihre Schichtdicke im Wesentlichen gleich aufgebaut.

Bevorzugt weist der Mehrschichtverbundwerkstoff eine Gesamtdicke von 0,5 bis 2 mm, vorzugsweise 0,7 bis 1,8 mm, insbesondere 0,9 bis 1,2 mm auf. Praktische Versuche haben gezeigt, dass es mit dem erfindungsgemäßen Mehrschichtverbundwerkstoff möglich ist, selbst bei diesen geringen Dicken ausgesprochen gute mechanische Eigenschaften zu erzielen.

Dabei hat es sich als besonders vorteilhaft erwiesen, wenn die Summe aller innenliegenden Lagen Faserverbundwerkstoff eine Gesamtdicke von 200 $\mu$m bis 1200 $\mu$m, bevorzugt 400 $\mu$m bis 1000 $\mu$m, besonders bevorzugt 500 $\mu$m bis 750 $\mu$m aufweist.

Vorteilhaft im Rahmen der Erfindung ist es ferner, wenn die Dicke jeder einzelnen der beiden außenliegenden Lagen Faserverbundwerkstoff jeweils 100 bis 250 $\mu$m, bevorzugt, 120 $\mu$m bis 230 $\mu$m, besonders bevorzugt 130 $\mu$m bis 180 $\mu$m beträgt.

Erfindungsgemäß bevorzugte Faserverbundwerkstofflagen weisen einen Faservolumengehalt von $\geq$ 30 Vol.-% und $\leq$ 60 Vol.-%, vorzugsweise $\geq$ 35 Vol.-% und $\leq$ 55 Vol.-%, besonders bevorzugt von $\geq$ 37 Vol.-% und $\leq$ 52 Vol.-% auf. Beträgt der Faservolumengehalt weniger als 30 Vol.-%, so sind die mechanischen Eigenschaften des resultierenden Faserverbundwerkstoffs bei punktueller Belastung oftmals nicht optimal, d.h. der Faserverbundwerkstoff kann einer punktueller Belastung nicht genügend standhalten und teils sogar durchstoßen werden. Ein Faservolumengehalt von über 60 Vol.-% führt ebenfalls zu einer Verschlechterung der mechanischen Eigenschaften des Faserverbundwerkstoffs. Ohne an wissenschaftliche Theorien gebunden sein zu wollen, scheint dies darauf zurückführbar zu sein, dass die Fasern bei der Imprägnierung bei derartig hohen Faservolumengehalten nicht mehr ausreichend benetzt werden können, was zu einer Zunahme an Lufteinschlüssen und zu einem vermehrten Auftreten von Oberflächendefekten im Faserverbundwerkstoff führt.

Bei einer Ausführungsform des Mehrschichtverbundwerkstoffs liegt der Volumengehalt des Fasermaterials am Gesamtvolumen des Mehrschichtverbundwerkstoffs im Bereich von 30 bis 60 Vol.-%, bevorzugt im Bereich 40 bis 55 Vol.-%.

Gemäß einer Ausführungsform der Erfindung weisen die außenliegenden Lagen Faserverbundwerkstoff einen Faservolumengehalt von höchstens 50 Vol.-%, vorzugsweise höchstens 45 Vol.-%, insbesondere höchstens 42 Vol.-% auf.

Gemäß einer besonderen Ausführungsform der Erfindung weisen die außenliegenden Lagen Faserverbundwerkstoff einen Faservolumengehalt von mindestens 30 Vol.-%, vorzugsweise mindestens 35 Vol.-%, insbesondere mindestens 37 Vol.-% auf.

Diese Ober- und Untergrenzen für den Faservolumengehalt sind mit besonders vorteilhaften mechanischen Eigenschaften verbunden, wie weiter oben beschrieben. Sie können mit anderen genannten Eigenschaften des Faserverbundwerkstoffs bzw. Mehrschichtverbundwerkstoffs kombiniert werden.

Gemäß einer weiteren besonderen Ausführungsform der Erfindung weisen die außenliegenden Lagen Faserverbundwerkstoff einen geringeren Volumengehalt an Fasern, bezogen auf das Gesamtvolumen der Lage Faserverbundwerkstoff, auf als die mindestens eine innenliegende Lage Faserverbundwerkstoff.

Die innenliegenden Lagen Faserverbundwerkstoff können einen Faservolumengehalt von 40 bis 60 Vol.-%, bevorzugt 45 bis 55 Vol.-%, besonders bevorzugt 48 bis 52 Vol.-% bezogen auf das Gesamtvolumen der Lage Faserverbundwerkstoff aufweisen.

Unter Vol.-% wird hier der Volumenanteil (% v/v) bezogen auf das Gesamtvolumen der Lage Faserverbundwerkstoff verstanden.

Bevorzugt weisen die bevorzugt mindestens drei Lagen Faserverbundwerkstoff des erfindungsgemäßen Mehrschichtverbundwerkstoffs im Wesentlichen keine Hohlräume, insbesondere im Wesentlichen keine Lufteinschlüsse, auf.

Im Wesentlichen keine Hohlräume bedeutet gemäß einer Ausführungsform, dass der Hohlraumgehalt der mindestens drei Lagen Faserverbundwerkstoff des erfindungsgemäßen Mehrschichtverbundwerkstoffs unter 2 Vol.-%, insbesondere unter 1 Vol.-%, besonders bevorzugt unter 0,5 Vol.-%, beträgt.

Die Ermittlung des Hohlraumgehalts einer Lage Faserverbundwerkstoff oder des Mehrschichtverbundwerkstoffs kann auf unterschiedlichen Wegen erfolgen, welche als allgemein anerkannt betrachtet werden. Beispielsweise kann der Hohlraumgehalt eines Prüfkörpers durch den Harz-Veraschungstest erfolgen, bei dem ein Probekörper in einem Ofen beispielsweise einer Temperatur von 600°C für 3 Stunden ausgesetzt wird, um das Harz, welches die Fasern in dem Probekörper umschließt zu verbrennen. Die Masse der derart freigelegten Fasern kann dann ermittelt werden um in einem weiteren kalkulatorischen Schritt auf den Hohlraumgehalt des Probekörpers zu schließen. Ein derartiger Harz- Veraschungstest kann in Anlehnung an die ASTM D 2584-08 durchgeführt werden, um die Einzelgewichte der Fasern und der Polymermatrix zu bestimmen. Hieraus kann in einem weiteren Schritt der Hohlraumgehalt des Probekörpers ermittelt werden, indem die nachfolgende Gleichung 1 genutzt wird:

$$Vf = 100 * (\rho t - \rho c) / \rho t \qquad \text{(Gleichung 1)},$$

wobei

- Vf den Hohlraumgehalt der Probe in [%];
- ρc die Dichte des Probekörpers, beispielsweise ermittelt durch Flüssig- oder Gaspyknometrie;
- ρt die theoretische Dichte des Probekörpers ermittelt nach folgender Gleichung 2

$$\rho t = 1 / [Wf / \rho f + Wm / \rho m] \qquad \text{(Gleichung 2)}$$

- ρm die Dichte der Polymermatrix (beispielsweise bei einer entsprechenden Kristallinität);
- ρf die Dichte der verwendeten Fasern;
- Wf der Gewichtsanteil der verwendeten Fasern und
- Wm der Gewichtsanteil der Polymermatrix; sind.

Alternativ kann der Hohlraumgehalt durch chemisches Auflösen der Polymermatrix aus dem Probekörper heraus in Anlehnung an ASTM D 3171-09 erfolgen. Der Harz-Veraschungstest sowie die chemische Auflösungsmethode sind eher für Glasfasern geeignet, welche im Allgemeinen gegen schmelzen oder chemische Behandlung inert sind. Weitere Methoden für sensitivere Fasern sind die indirekte Berechnung des Hohlraumgehalts über die Dichten des Polymers, der Fasern sowie des Probekörpers nach ASTM D 2734-09 (Methode A), wobei die Dichten nach ASTM

D792-08 (Methode A) bestimmt werden können. Des Weiteren können auch bildverarbeitende Programme, Rasterschablonen oder das Auszählen der Fehlstellen zur Auswertung des Hohlraumgehalts einer Bildaufnahme, welche durch konventionelle Mikroskopie ermittelt wurde, herangezogen werden.

Ein weiterer Weg zur Bestimmung des Hohlraumgehalts ist die Dickendifferenzmethode, welche in der Ermittlung der Schichtdickendifferenz zwischen theoretischer Bauteildicke und der tatsächlichen Bauteildicke bei bekannten Flächengewichten und Dichten von Polymer sowie Faser besteht. Bei der Berechnung der theoretischen Bauteildicken wird davon ausgegangen, dass keine Hohlräume in dem Aufbau vorhanden sind und eine vollständige Benetzung der Fasern mit Polymer vorliegt. Der Bezug der Dickendifferenz auf die tatsächliche Bauteildicke ergibt den prozentualen Hohlraumgehalt. Die Messung der Dicken kann hierbei beispielsweise mit einer Bügelmessschraube erfolgen. Fehlerminimierte Ergebnisse lassen sich bei dieser Methode bevorzugt durch die Ermittlung des Hohlraumgehalts an Bauteilen bestehend aus mehreren Einzelschichten, bevorzugt mehr als 4 Schichten, besonders bevorzugt mehr als 6 Schichten und ganz besonders bevorzugt mehr als 8 Schichten, bestimmen.

All die oben beschriebenen Verfahren führen bei Mittesten eines entsprechenden Standards zu vergleichbaren Ergebnissen.

Ganz besonders bevorzugt weisen die Lagen Faserverbundwerkstoff des erfindungsgemäßen Mehrschichtverbundwerkstoffs keine Hohlräume, insbesondere keine Lufteinschlüsse, auf.

**Herstellung der Faserverbundwerkstoffe und der Mehrschichtverbundwerkstoffe**

Gegenstand der Erfindung ist ferner ein Verfahren zur Herstellung des erfindungsgemäßen Faserverbundwerkstoffes bzw. des Mehrschichtverbundwerkstoffs.

Die Faserverbundwerkstofflagen des erfindungsgemäßen Mehrschichtverbundwerkstoffs können mit den üblichen dem Fachmann bekannten Verfahren zur Herstellung von Faserverbundwerkstoffen hergestellt werden.

Für die Herstellung der erfindungsgemäßen Faserverbundwerkstoffe bzw. Mehrschichtverbundwerkstoffe können verschiedene Herstellungsmethoden eingesetzt werden. Dabei kann zunächst grundlegend unterschieden werden, ob der Faserverbundwerkstoff bzw. der Mehrschichtverbundwerkstoff zum Beispiel aus unidirektionalen Faserlagen, Gewebelagen, Wirrfaserlagen oder aus Kombinationen daraus besteht, wobei unidirektionale Fasern entweder in Form eines Halbzeugs (z.B. Gelege) oder direkt als reiner Faserstrang in die Verbundwerkstofflagen eingebracht werden können. Bei letzterem Ansatz werden die Faserstränge in der Regel zunächst einlagig mit dem thermoplastischen Harz imprägniert (dem Faserverbundwerkstoff), um anschließend zu einem mehrlagigen System (Laminat), dem Mehrschichtverbundwerkstoff, verpresst zu werden, wobei es hier grundsätzlich verschiedene Methoden der Imprägnierung gibt. Sofern das Composite Sheet aus Faserhalbzeugen (Gewebe, Gelege, Wirrfaser etc.) herstellt wird, zeigt der Stand der Technik ebenfalls verschiedene Möglichkeiten auf, wie Faser und Matrix zusammengebracht werden können. Gängige Methoden sind zum Bespiel das Verfahren mithilfe von Pulver Prepregs oder das so genannte Film Stacking Verfahren. Das Film Stacking Verfahren kann bevorzugt für die Herstellung der zuvor beschriebenen Faserverbundwerkstoffe eingesetzt werden. Hierbei werden abwechselnd Folien und Gewebelagen aufeinander geschichtet, wobei Flächengewicht des Gewebes und Dicke der Folien beispielsweise so abgestimmt sein können, dass man einen gewünschten Faservolumengehalt erhält.

Gemäß einer bevorzugten Ausführungsform der Erfindung sind die Faserverbundwerkstofflagen des Mehrschichtverbundwerkstoffs herstellbar durch Auftragen eines geschmolzenen auf Polycarbonat basierenden Kunststoffs auf ein über die Glasübergangstemperatur des Kunststoffs vorgeheiztes Endlos-Faserband unter Druck-Scher-Vibrationsbeaufschlagung. Ein derartiges Herstellungsverfahren ist in DE 10 2011 005 462 B3 beschrieben.

Unter einem Endlos-Faserband wird erfindungsgemäß eine Mehrzahl von zusammengeführten Rovings verstanden, wobei es sich bei den Rovings um Bündel aus vielen Endlosfasern ohne Drall handelt.

Das bevorzugte Verfahren zur Herstellung einer Lage Faserverbundwerkstoff des Mehrschichtverbundwerkstoffs umfasst insbesondere die folgenden Schritte:

- Bereitstellen eines Endlos-Faserbandes und Fördern des Endlos-Faserbandes längs eines Bearbeitungsweges,
- Vorheizen des Endlos-Faserbandes auf eine Bearbeitungstemperatur, die höher ist als die Glasübergangstemperatur des auf Polycarbonat basierenden Kunststoffs,
- Auftragen des geschmolzenen auf Polycarbonat basierenden Kunststoffs auf einer gesamten Breite des Endlos-Faserbandes auf einer Oberfläche des Endlos-Faserbandes,
- Aufbringen eines Drucks auf das Endlos-Faserband senkrecht zur Bandebene nach dem Auftragen des auf Polycarbonat basierenden Kunststoffs, wobei das Druckaufbringen mit mindestens einem Druckstempel bei gleichzeitiger Scher-Vibrationsbeaufschlagung des Druckstempels mit einer Vibrations-Bewegungskomponente in der Bandebene und quer zu einer Band-Laufrichtung erfolgt,
- Halten des Endlos-Faserbandes innerhalb eines Bearbeitungstemperaturbereiches oberhalb der Glasübergangstemperatur des auf Polycarbonat basierenden Kunststoffs mindestens bis nach Abschluss der Druck-Scher-Vibrationsbeaufschlagung.

Ein Schmelzauftrag mit nachfolgender Druck-Scher-Vibrationsbeaufschlagung, solange das Roh-Faserband eine Temperatur oberhalb der Glasübergangstemperatur des auf Polycarbonat basierenden Kunststoffs hat, führt zu einem wirksamen Einarbeiten der Kunststoffschmelze in die gesamte Faser-Volumenstruktur des Roh-Faserbandes.

Bevorzugt wird eine Temperatur des Endlos-Faserbandes von 380°C nicht überschritten. Üblicherweise beträgt die Temperatur des Endlosfaserbandes zwischen 180°C bis 280°C, bevorzugt zwischen 200°C bis 260°C, weiter bevorzugt bis 240°C, besonders bevorzugt zwischen 210°C bis 230°C, insbesondere 220°C. Wenn hier von Erhitzen über die Glasübergangstemperatur des Kunststoffs oder Halten über der Glasübergangstemperatur des Kunststoffs die Rede ist, so ist damit das Erhitzen auf eine Temperatur gemeint, bei der der Kunststoff vollständig geschmolzen vorliegt. Die Glasübergangstemperatur des Kunststoffs wird bestimmt mittels DIN EN ISO 11357-2:2014-07 bei einer Aufheizrate von 20 K/min. Eine Differenz zwischen der Fasertemperatur und der Schmelzetemperatur beim Zusammentreffen der Kunststoffschmelze mit dem Endlos-Faserband liegt im Bereich von 60°C bis 120°C, bevorzugt von 70°C bis 110°C, besonders bevorzugt von 80°C bis 100°C.

Durch die Druck-Scher-Vibrationsbeaufschlagung werden Gasvolumina, die sich noch innerhalb des Roh-Faserbandes befinden, effizient ausgetrieben. Das Verfahren kann kontinuierlich durchgeführt werden. Das Halten des Endlos-Faserbandes auf einer Temperatur oberhalb der Glasübergangstemperatur des Kunststoffs stellt sicher, dass der auf Polycarbonat basierende Kunststoff nicht unerwünscht vor dem vollständigen Eindringen und Teilen innerhalb und auf dem Endlos-Faserband erstarrt. Nach Abschluss der Druck-Scher-Vibrationsbeaufschlagung wird die Temperatur oberhalb der Schmelztemperatur des Polymers bevorzugt noch während eines Beruhigungsintervalls beibehalten. Anschließend wird die Lage Faserverbundwerkstoff definiert abgekühlt. Nach dem Durchführen der angegebenen Verfahrensschritte kann das hergestellte, imprägnierte Endlos-Faserband definiert abgekühlt werden.

Das Endlos-Faserband kann eine Vielzahl von Endlos-Fasern aufweisen. Aufgrund der Druck-Scher-Vibrationsbeaufschlagung kann eine geringe bis nicht vorhandene Schädigung der Fasern bei guter Kunststoffdurchdringung des Faserbandes, also bei guter Imprägnierung, realisiert werden.

Das Verfahren kann kontinuierlich oder diskontinuierlich durchgeführt werden.

Besonders bevorzugt wird das Verfahren zur Herstellung einer Lage Faserverbundwerkstoff des Mehrschichtverbundwerkstoffs so geführt, dass das Auftragen des auf Polycarbonat basierenden Kunststoffs auf das Endlos-Faserband erfolgt, während das Endlos-Faserband unter Normal-Umgebungsdruck gefördert wird. Ein solches Auftragen des Kunststoffs vermeidet eine aufwändige Abdichtung einer unter Druck stehenden Auftragskammer nach außen.

Es ist ferner bevorzugt, das Verfahren zur Herstellung einer Faserverbundwerkstofflage des Mehrschichtverbundwerkstoffs so zu führen, dass die Druck-Scher-Vibrationsbeaufschlagung eines Abschnitts des Endlos-Faserbandes nach dem Kunststoffauftrag mehrmals hintereinander längs des Bearbeitungsweges erfolgt. Es ist auch möglich, das Verfahren so zu führen, dass die Druck-Scher-Vibrationsbeaufschlagung eines Abschnitts des Endlos-Faserbandes nach dem Kunststoffauftrag von beiden Seiten der Bandebene her erfolgt. Eine mehrfache Druck-Scher-Vibrationsbeaufschlagung erhöht die Effizienz des Herstellungsverfahrens. Quer-Bewegungskomponenten der verschiedenen Druck-Scher-Vibrationsbeaufschlagungseinrichtungen können synchronisiert gegenläufig, also im Gegentakt, gesteuert werden. Zwischen den hintereinander erfolgenden Druck-Scher-Vibrationsbeaufschlagungen kann gezielt jeweils ein Beruhigungsintervall vorgesehen sein, bei dem das Roh-Faserband während einer vorgegebenen Zeitspanne nicht mit Druck und/oder Scher-Vibration beaufschlagt ist. Eine Druck-Scher-Vibrationsbeaufschlagung von beiden Seiten her kann durch Druckbeaufschlagungseinrichtungen erfolgen, die im Bearbeitungsweg nacheinander angeordnet sind. Alternativ ist eine gleichzeitige Druck-Scher-Vibrationsbeaufschlagung von beiden Seiten her möglich. Auch die Druck-Scher-Vibrationsbeaufschlagung von beiden Seiten her kann mit einer synchronisierten Gegenläufigkeit der Quer-Bewegungskomponenten, also im gesteuerten Gegentakt, erfolgen.

Die Frequenzen der Druck-Scher-Vibrationsbeaufschlagung liegen bevorzugt im Bereich zwischen 1 Hz und 40 kHz. Amplituden der Scher-Vibrationsbeaufschlagung liegen üblicherweise im Bereich zwischen 0,1 mm und 5 mm. Ein Druck der Druck-Scher-Vibrationsbeaufschlagung liegt bevorzugt im Bereich zwischen 0,01 MPa und 2 MPa.

Unter dem Verbinden der geschichteten Lagen Faserverbundwerkstoff wird erfindungsgemäß jedes Verfahren verstanden, welches eine körperliche Verbindung der geschichteten Lagen Faserverbundwerkstoff zur Folge hat. Vorzugsweise erfolgt das Verbinden der geschichteten Lagen Faserverbundwerkstoff zum Mehrschichtverbundwerkstoff mittels Druck und/oder Temperatur, z.B. durch Laminierung. Der zum Verbinden der geschichteten Lagen Faserverbundwerkstoff zum Mehrschichtverbundwerkstoff eingesetzte Druck kann im Bereich von 5 bis 15 bar, bevorzugt 7 bis 13 bar, besonders bevorzugt 8 bis 12 bar liegen. Die Temperatur zum Verbinden der Faserverbundwerkstofflagen kann 80°C bis 300°C betragen. Wird ein Verbindungsverfahren mit Heiz- und Kühlzonen angewendet, so kann die Temperatur zum Verbinden der Faserverbundwerkstofflagen in den Heizzonen von 220°C bis 300°C, bevorzugt von 230°C bis 290°C, besonders bevorzugt von 240°C bis 280°C, betragen. Die Temperatur in den Kühlzonen kann von 80°C bis 140°C, bevorzugt von 90°C bis 130°C, besonders bevorzugt von 100°C bis 120°C, betragen.

Neben dem Laminieren sind jedoch auch beispielsweise Kleben oder Schweißen zum Verbinden der geschichteten Lagen Faserverbundwerkstoff möglich.

Gemäß einer bevorzugten Ausführungsform resultiert das Verbinden der geschichteten Lagen Faserverbundwerkstoff in flächig miteinander verbundenen Lagen Faserverbundwerkstoff. Flächig bedeutet dabei, dass mindestens 50 %, vorzugsweise mindestens 75 %, 90 %, 95 %, 99 % oder 100 % ("vollflächige" Verbindung) der einander zugewandten Oberflächen zweier benachbarter Lagen Faserverbundwerkstoff miteinander unmittelbar verbunden sind. Der Grad der Verbindung kann mikroskopisch in Querschnitten bestimmt werden oder auch durch die Abwesenheit von Hohlräumen, z.B. Lufteinschlüssen, im Faserverbundwerkstoff bestimmt werden.

Ein bevorzugtes Verfahren zur Herstellung eines erfindungsgemäßen Mehrschichtverbundwerkstoffes aus mindestens drei erfindungsgemäßen Lagen Faserverbundwerkstoff umfasst die folgenden Schritte:

- Bereitstellen mindestens einer innenliegenden Lage Faserverbundwerkstoff und zweier außenliegender Lagen Faserverbundwerkstoff, wobei die Herstellung der einzelnen Lagen Faserverbundwerkstoff durch Auftragen einer geschmolzenen, auf aromatischem Polycarbonat basierenden Zusammensetzung, enthaltend eine Zusammensetzung, wie vorstehend beschrieben,
  auf ein über die Glasübergangstemperatur des Polycarbonats vorgeheiztes Roh-Faserband aus Fasermaterial aufgetragen wird,

- Schichten der Lagen aus Faserverbundwerkstoff in der gewünschten Orientierung zueinander, bezogen auf die Orientierung des Fasermaterials,

- Verbinden der geschichteten Lagen aus Faserverbundwerkstoff zum Mehrschichtverbundwerkstoff.

Mehrschichtverbundwerkstoffe lassen sich weiterhin auch über eine statische Presse herstellen. Dabei werden Folien aus den erfindungsgemäß eingesetzten Polycarbonat-basierten Zusammensetzungen und die Gewebelagen abwechselnd geschichtet, wobei die äußeren Lagen jeweils durch eine Folienlage abgeschlossen werden.

Aus den erfindungsgemäßen Lagen Faserverbundwerkstoff lassen sich breite Lagen Faserverbundwerkstoff für anspruchsvolle Faserverbundbauteile herstellen, bei denen eine Abzeichnungsfreiheit über die gesamte Fläche gefordert ist, insbesondere für Karosseriebauteile bei Fahrzeugen. "Breite Lagen Faserverbundwerkstoff' bedeutete hierbei, dass die Lagen Faserverbundwerkstoff eine Breite von mehreren Metern erreichen können. Üblicherweise weisen die breiten Lagen Faserverbundwerkstoff Breiten von 280 mm bis 1800 mm auf.

Ein vorteilhaftes Verfahren zur Herstellung von sehr breiten Lagen Faserverbundwerkstoff ist in der WO 2013/098224 A1 beschrieben. Dieses Verfahren ermöglicht die Herstellung eines hinsichtlich seiner Eigenschaften über die gesamte Breite möglichst homogenen Faserbandes. Hierzu werden zwei oder mehr Einzelfaserbänder einer vorgegebenen Breite, die jeweils eine mit dem Polymer imprägnierte Filament-Struktur aufweisen, in einer Heiz-Druckbeaufschlagungseinrichtung zusammengeführt, wobei die Einzel-Faserbänder in einem Eintrittsbereich in die Heiz-Druckbeaufschlagungseinrichtung nebeneinander so gefördert werden, das benachbarte Seitenkanten der zusammengeführten Einzel-Faserbänder in Stoßbereichen aneinander anliegen, die nebeneinander geförderten Einzel-Faserbänder dann mit der Heiz-Druckbeaufschlagungseinrichtung auf eine Temperatur oberhalb eines Schmelzpunktes des Polymers geheizt werden, wobei das Heizen über die gesamte Breite der Einzel-Faserbänder quer (y) zu deren Förderrichtung (x) erfolgt; dann wird Druck mit der Heiz-Druckbeaufschlagungseinrichtung auf die nebeneinander geförderten, aufgeheizten Einzel-Faserbänder aufgebracht; anschließend werden die zusammengeführten Einzel-Faserbänder in einem Bearbeitungstemperaturbereich oberhalb des Polymerschmelzpunktes gehalten, bis die Stoßbereiche der zusammengeführten Einzel-Faserbänder miteinander verschweißt sind und dann wird das Breit-Faserband aus den miteinander verschweißten Einzel-Faserbändern abgekühlt.

Bevorzugt wird während des Heizens eine Scher-Vibrationsbeaufschlagung auf die zusammengeführten Einzel-Faserbänder mit der Heiz-Druckbeaufschlagungseinrichtung aufgebracht, wobei eine Scherkraft längs einer Scherkraft-Beaufschlagungseinrichtung (y) auf die Einzelfaserbänder ausgeübt wird, die senkrecht auf einer Förderrichtung (x) und senkrecht auf einer Band-Normalen (z) steht. Dieses führt zu einer wirksamen homogenen Verteilung der Polymerschmelze in die gesamte Faser-Volumenstruktur des Breit-Faserbandes. Gasvolumina, die sich noch innerhalb der Einzel-Faserbänder und insbesondere im Stoßbereich benachbart aneinander liegender Einzel-Faserbänder befinden, können hierdurch effizient ausgetrieben werden. Durch die Scher-Vibrationsbeaufschlagung erfolgt ein Aufspreizen der Einzel-Faserbänder, was eine Benetzung der Filamente mit der aufgeschmolzenen Polymermatrix verbessert.

Das Aufspreizen kann mit einer Verringerung der Bandstärke der hergestellten breiten Lage Faserverbundwerkstoffe im Vergleich zur Bandstärke der Einzel-Faserbänder einhergehen.

Die Druckeinheit der Heiz-Druckbeaufschlagungseinrichtung ist bevorzugt ein Pressstempel oder ein Walzenpaar, aber auch eine Intervallheißpresse, eine isobare Doppelband- oder Membranpresse, ein Kalander oder eine Kombination aus diesen Alternativen.

Das beschriebene Verfahren zur Herstellung einer breiten Lage Faserverbundwerkstoff wird kontinuierlich oder

diskontinuierlich durchgeführt.

Ein weiterer Vorteil des erfindungsgemäßen Mehrschichtverbundwerkstoffs ist, dass er in beliebige Formen umgeformt werden kann. Zur Umformung können alle dem Fachmann bekannten Umformungsverfahren eingesetzt werden. Solche Umformungsverfahren können unter Druck- und/oder Wärmeeinwirkung erfolgen.

Bevorzugt erfolgt die Umformung unter Wärmeeinwirkung, insbesondere durch Thermoverformung.

Um eine bessere Verträglichkeit der Faserlagen und insbesondere der Endlosfasern mit dem thermoplastischen Matrixmaterial zu erhalten, können die Faserlagen, insbesondere die Endlosfasern oder Gewebe / Gewirke, mit einer Silanverbindung an ihrer Oberfläche vorbehandelt sein. Bevorzugte Silanverbindungen sind Aminopropyltrimethoxysilan, Aminobutyltrimethoxysilan, Aminopropyltriethoxysilan, Aminobutyltriethoxysilan.

Generell lassen sich die Fasern über Schlichten derart chemisch und/oder physikalisch modifizieren, um beispielsweise bei der anschließenden Herstellung von Faserverbundwerkstoffen aus den Faserlagen und dem Matrixmaterial den gewünschten Grad der Anbindung zwischen Fasern und dem Matrixmaterial einzustellen. Hierzu können alle dem Fachmann bekannten Schlichten eingesetzt werden, und zwar neben den oben genannten Silanverbindungen bevorzugt Epoxidharze und deren Derivate, Epoxyester, Epoxyether, Epoxyurethane, Polyurethanester, Polyurethanether, Isocyanate, Polyimide, Polyamide und beliebige Mischungen aus zwei oder mehr der vorstehenden Verbindungen. Die konkrete Auswahl des Schlichtematerials hängt von dem Material der Fasern und der gewünschten Stärke der Anbindung ab. Dabei kann die Schlichte beispielsweise in Form einer wässrigen oder nichtwässrigen Lösung oder Emulsion eingesetzt werden, wobei die Anbringung der Schlichte an die erfindungsgemäßen Fasern dabei nach bekannten Verfahren für die Beschlichtung von Kurzfasern, beispielsweise in einem Tauchprozess, erfolgen kann.

Wesentlicher Aspekt ist die Tatsache, dass das strukturversteifende Fasermaterial und das thermoplastische Material eine stoffschlüssige Verbindung miteinander eingehen. Die Einstellung der stoffschlüssigen Verbindung erfolgt über die Prozessparameter, insbesondere Massetemperatur und Werkzeugtemperatur sowie Druck und hängt auch von der oben erwähnten Schlichte ab.

Erfindungsgemäß bevorzugt ist ein Faserverbundwerkstoff, umfassend mindestens eine Lage Fasermaterial, eingebettet in eine auf aromatischem Polycarbonat basierende Zusammensetzung, enthaltend

A) mindestens 55 Gew.-% mindestens eines aromatischen Polycarbonats,

B) 5 Gew.-% bis 11 Gew.-% mindestens eines Quarzes und/oder Quarzglases,

C) 4 Gew.-% bis 15 Gew.-% mindestens eines cyclischen Phosphazens gemäß Formel (1)

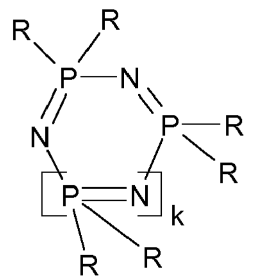

(1),

wobei

R jeweils gleich oder verschieden ist und für einen Aminrest, einen jeweils gegebenenfalls halogenierten $C_1$- bis $C_8$-Alkylrest, $C_1$- bis $C_8$- Alkoxyrest, jeweils gegebenenfalls durch Alkyl und/oder Halogen substituierten $C_5$- bis $C_6$-Cycloalkylrest, jeweils gegebenenfalls durch Alkyl, und/oder Halogen und/oder Hydroxy-substituierten $C_6$- bis $C_{20}$-Aryloxyrest, jeweils gegebenenfalls durch Alkyl, und/oder Halogen substituierten $C_7$- bis $C_{12}$-Aralkylrest oder einen Halogen-Rest oder einen OH-Rest steht,

k für eine ganze Zahl von 1 bis 10 steht,

D) 3 bis 12 Gew.-% mindestens einer Phosphorverbindung der allgemeinen Formel (2)

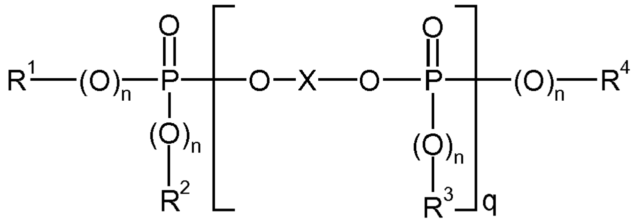

(2),

worin

$R^1$, $R^2$, $R^3$ und $R^4$ unabhängig voneinander für einen $C_1$- bis $C_8$-Alkylrest, jeweils gegebenenfalls halogeniert und jeweils verzweigt oder unverzweigt, und/oder $C_5$- bis $C_6$-Cycloalkylrest, $C_6$- bis $C_{20}$-Arylrest oder $C_7$- bis $C_{12}$-Aralkylrest, jeweils gegebenenfalls durch verzweigtes oder unverzweigtes Alkyl und/oder Halogen substituiert, stehen,

n unabhängig voneinander 0 oder 1,

q einen ganzzahligen Wert von 0 bis 30,

X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann, bedeuten,

E) gegebenenfalls weitere Additive,

wobei als Fasermaterial Carbonfasern oder Glasfasern in Form von unidirektional orientierten Endlosfasern verwendet sind.

Erfindungsgemäß noch weiter bevorzugt ist ein Faserverbundwerkstoff, umfassend mindestens eine Lage Fasermaterial, eingebettet in eine auf aromatischem Polycarbonat basierende Zusammensetzung, enthaltend

A) mindestens 65 Gew.-% mindestens eines aromatischen Polycarbonats,

B) 6 Gew.-% bis 11 Gew.-% mindestens eines Quarzes und/oder Quarzglases,

C) 4,5 Gew.-% bis 12 Gew.-% mindestens eines cyclischen Phosphazens gemäß Formel (1)

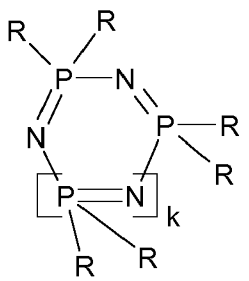

(1),

wobei

R jeweils gleich oder verschieden ist und für einen Aminrest, einen jeweils gegebenenfalls halogenierten $C_1$- bis $C_8$-Alkylrest, $C_1$- bis $C_8$- Alkoxyrest, jeweils gegebenenfalls durch Alkyl und/oder Halogen substituierten $C_5$- bis $C_6$-Cycloalkylrest, jeweils gegebenenfalls durch Alkyl, und/oder Halogen und/oder Hydroxy-substituierten $C_6$- bis $C_{20}$-Aryloxyrest, jeweils gegebenenfalls durch Alkyl, und/oder Halogen substituierten $C_7$- bis $C_{12}$-Aralkylrest oder einen Halogen-Rest oder einen OH-Rest steht,

k für eine ganze Zahl von 1 bis 10, steht,

D) 4 bis 11 Gew.-% mindestens einer Phosphorverbindung der allgemeinen Formel (V)

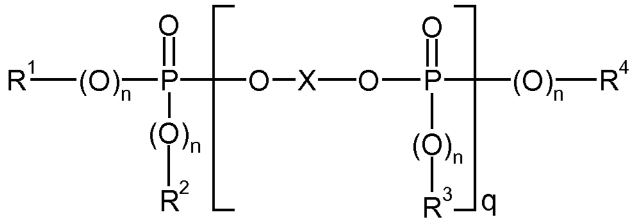

(2),

worin

$R^1$, $R^2$, $R^3$ und $R^4$ unabhängig voneinander für einen $C_1$- bis $C_8$-Alkylrest, jeweils gegebenenfalls halogeniert und jeweils verzweigt oder unverzweigt, und/oder $C_5$- bis $C_6$-Cycloalkylrest, $C_6$- bis $C_{20}$-Arylrest oder $C_7$- bis $C_{12}$-Aralkylrest, jeweils gegebenenfalls durch verzweigtes oder unverzweigtes Alkyl und/oder Halogen substituiert, stehen,

n unabhängig voneinander 0 oder 1,

q einen ganzzahligen Wert von 0 bis 30,

X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann, bedeuten;

E) gegebenenfalls weitere Additive,

wobei als Fasermaterial Carbonfasern oder Glasfasern in Form von unidirektional orientierten Endlosfasern verwendet sind.

Erfindungsgemäß besonders bevorzugt ist ein Faserverbundwerkstoff, umfassend mindestens eine Lage Fasermaterial, eingebettet in eine auf aromatischem Polycarbonat basierende Zusammensetzung, bestehend aus

A) 65 Gew.-% bis 82 Gew.-% mindestens eines aromatischen Polycarbonats,

B) 8 Gew.-% bis 10 Gew.-% mindestens eines Quarzes und/oder Quarzglases,

C) 5 Gew.-% bis 10 Gew.-% mindestens eines cyclischen Phosphazens gemäß Formel (1),
wobei als cyclisches Phosphazen gemäß Komponente C mindestens Phenoxyphosphazen enthalten ist,

D) 5 bis 10 Gew.-% mindestens einer Phosphorverbindung der allgemeinen Formel (2)
wobei als Phosphorverbindung der Formel (2) nur die Phosphorverbindung der Formel (2b)

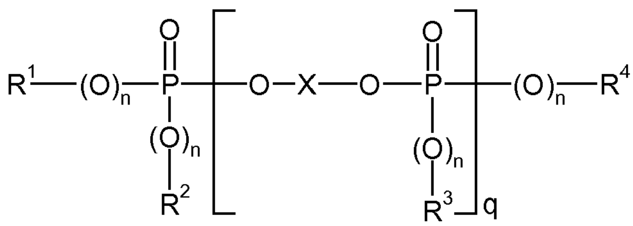

(2b)

mit einem mittleren q-Wert q = 1,0 bis 1,2 enthalten ist,

E) 0 bis 10 Gew.-% eines oder mehrerer weiterer, von den Komponenten B, C und D verschiedener Additive, ausgewählt aus der Gruppe, bestehend aus UV-Stabilisatoren, IR-Stabilisatoren, Antioxidantien, Entformungsmitteln, Fließhilfsmitteln, Antistatika, Schlagzähmodifikatoren, Farbmitteln, weiteren Füllstoffen, Thermostabilisatoren, Antitropfmitteln, weiteren Flammschutzmitteln, Antistatika,

wobei als Fasermaterial Carbonfasern oder Glasfasern in Form von Endlosfasern verwendet sind.

Diese in den drei Absätzen zuvor als bevorzugt, noch weiter bevorzugt und besonders bevorzugt genannten Ausführungsformen enthalten in den als Matrixmaterial eingesetzten Zusammensetzungen bevorzugt kein PTFE, insbesondere auch kein PTFE/SAN, besonders bevorzugt überhaupt kein Fluorhaltiges Antitropfmittel.

Besonders bevorzugt sind bei dem Phosphazen alle Reste R = Phenoxyreste, ganz besonders bevorzugt wird Hexaphenoxyphosphazen eingesetzt. Die besonders bevorzugt Phosphorverbindung gemäß Komponente D ist

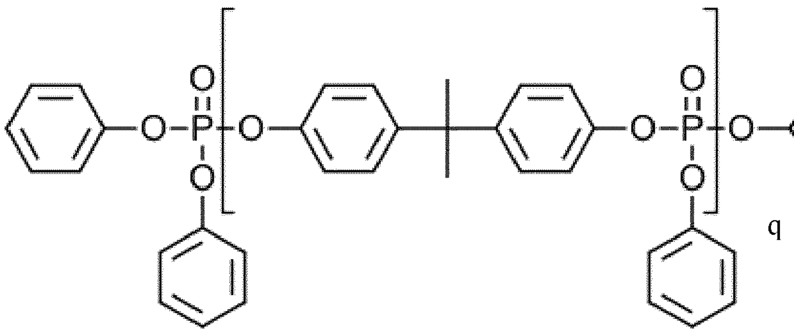

(2b‘),

wobei q zwischen 1,0 und 1,2 liegt.

Äußerst bevorzugt ist daher ein Faserverbundwerkstoff, umfassend mindestens eine Lage Fasermaterial, eingebettet in eine auf aromatischem Polycarbonat basierende Zusammensetzung, bestehend aus

A) 65 Gew.-% bis 82 Gew.-% mindestens eines aromatischen Polycarbonats,

B) 8 Gew.-% bis 10 Gew.-% mindestens eines Quarzes und/oder Quarzglases,

C) 5 Gew.-% bis 10 Gew.-% mindestens eines cyclischen Phosphazens gemäß Formel (1)
wobei als cyclisches Phosphazen gemäß Komponente C nur Phenoxyphosphazen enthalten ist und der Anteil cyclisches Phosphazen mit k = 1 50 bis 98 mol-%, bezogen auf die Gesamtmenge an cyclischem Phosphazen der Formel (1), beträgt.

D) 5 bis 10 Gew.-% mindestens einer Phosphorverbindung der allgemeinen Formel (2)
wobei als Phosphorverbindung der Formel (2) nur die Phosphorverbindung der Formel (2b)

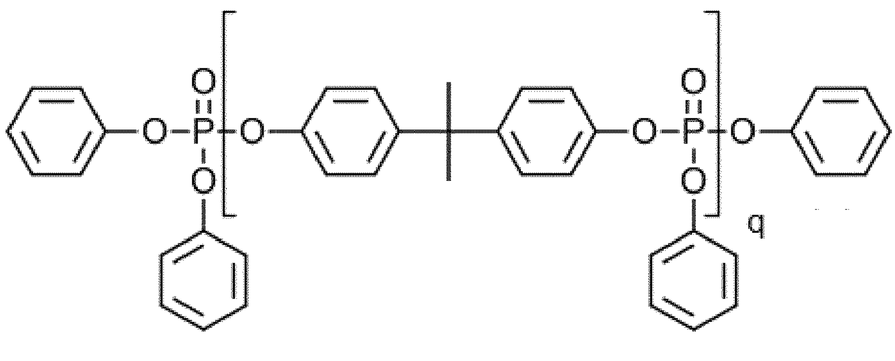

(2b)

mit einem mittleren q-Wert q = 1,0 bis 1,2 enthalten ist,

E) 0 bis 10 Gew.-% eines oder mehrerer weiterer, von den Komponenten B, C und D verschiedener Additive, ausgewählt aus der Gruppe, bestehend aus UV-Stabilisatoren, IR-Stabilisatoren, Antioxidantien, Entformungsmitteln, Fließhilfsmitteln, Antistatika, Schlagzähmodifikatoren, Farbmitteln, weiteren Füllstoffen, Thermostabilisatoren, Antitropfmitteln, weiteren Flammschutzmitteln, Antistatika,

wobei als Fasermaterial Carbonfasern oder Glasfasern in Form von unidirektional orientierten Endlosfasern verwendet sind.

Weiter ist erfindungsgemäß ein Mehrschichtverbundwerkstoff bevorzugt, umfassend mindestens drei übereinander liegende Lagen Faserverbundwerkstoff wie zuvor definiert. Dabei beträgt der Faservolumengehalt der Lagen Faserverbundwerkstoff besonders bevorzugt ≥ 35 Vol.-% und ≤ 55-Vol.-%.

Ein weiterer Gegenstand der Erfindung ist ein Gehäuse oder ein Gehäuseteil, welches geeignet ist für die Verwendung als oder den Einsatz in einem Gehäuse eines elektronischen Geräts, wobei das Gehäuseteil einen erfindungsgemäßen Mehrschichtverbundwerkstoff enthält.

Gehäuse oder Gehäuseteile erhältlich aus den erfindungsgemäßen Verbundwerkstoffen - Faserverbundwerkstoffen bzw. Mehrschichtverbundwerkstoffen - werden insbesondere im IT-Bereich verwendet, beispielsweise bei Computern, Ultrabooks, Monitoren, Tablets, Telefonen oder Mobiltelefonen. Beispielsweise kann ein Gehäuseteil die Rückseite eines Mobiltelefons, die Unterseite eines Laptops, die Monitorrückseite eines Laptops, die Rückseite eines Tablets, etc. darstellen oder aber auch nur Bestandteil einer Rückseite eines Mobiltelefons, einer Unterseite eines Laptops, einer Monitorrückseite eines Laptops, einer Rückseite eines Tablets, etc. sein. Bevorzugt ist das Gehäuseteil die Monitorrückseite (a-cover) oder die Unterseite (d-cover) eines Laptops. Entsprechende Gehäuse oder Gehäuseteile lassen sich insbesondere durch Umformung und/oder Assemblierung mit weiteren Komponenten erhalten.

Gegenstand der Erfindung sind weiterhin Bauteile sowie Struktur- oder Verkleidungselemente des Fahrzeuginnenbereichs (Wände, Deckenverkleidungen, Türen, Fenster etc.), Gepäckablagen, Führerpulte, Tische, Schall- und Dämmstoffe, vertikale Oberflächen der Fahrzeugaußenhaut, Außenflächen des Unterbaus, Leuchtenabdeckungen, Lichtdiffuser etc., wobei das Bauteil bzw. Struktur- oder Verkleidungselement einen erfindungsgemäßen Mehrschichtverbundwerkstoff enthält.

Faserverbundwerkstoffe der vorliegenden Erfindung können insbesondere verwendet werden zur Herstellung von dünnwandigen Formteilen (z.B. Datentechnik-Gehäuseteile, TV-Gehäuse, Laptops, Notebooks, Ultrabooks), wo besonders hohe Ansprüche an Kerbschlagzähigkeit, Flammwidrigkeit und Oberflächenqualität der eingesetzten Materialien gestellt werden. Dünnwandige Formteile sind solche, bei denen Wandstärken von weniger als etwa 3 mm, bevorzugt weniger als 3 mm, weiter bevorzugt von weniger als 2,5 mm, noch weiter bevorzugt weniger als 2,0 mm, ganz besonders bevorzugt von weniger als 1,5 mm vorliegen. "Etwa" bedeutet hierbei, dass der tatsächliche Wert nicht wesentlich vom genannten Wert abweicht, wobei eine Abweichung von nicht größer als 25 %, bevorzugt nicht größer als 10 %, als "nicht wesentlich" gilt. "Wandstärke" ist hierbei die Dicke der Wand lotrecht zur Fläche des Formteils mit der größten Ausdehnung, wobei über mindestens 60 %, bevorzugt über mindestens 75 %, weiter bevorzugt über mindestens 90 %, besonders bevorzugt über die gesamte Fläche die genannte Dicke vorliegt. Der Einsatz der erfindungsgemäßen Faserverbundwerkstoffe bzw. Mehrschichtkörper auch für Formteile mit größeren Dicken als 3 mm ist jedoch möglich.

Auch können erfindungsgemäße Faserverbundwerkstoffe zur Herstellung von Gehäuseteilen z.B. für Haushaltsgeräte, Büromaschinen, wie Monitore oder Drucker, Abdeckplatten für den Bausektor, Teile für den Kfz-Sektor oder Teile für den Elektrosektor, verwendet werden.

Weitere Einzelheiten und Vorteile der Erfindung ergeben sich aus der nachfolgenden Beschreibung der zugehörigen Zeichnung, die bevorzugte Ausführungsformen zeigt. In der Zeichnung zeigen:

Fig. 1 einen Mehrschichtverbundwerkstoff in schematischer und perspektivischer Darstellung aus drei übereinanderliegenden Lagen Faserverbundwerkstoff mit Ausschnittsvergrößerung, wobei die innenliegende Lage relativ zu den außenliegenden Lagen Faserverbundwerkstoff um 90° rotiert ist,

Fig. 2 einen Mehrschichtverbundwerkstoff in schematischer und perspektivischer Darstellung aus fünf übereinanderliegenden Lagen Faserverbundwerkstoff, wobei die innenliegenden Lagen gleich orientiert sind und ihre Orientierung relativ zu den außenliegenden Lagen Faserverbundwerkstoff um 90° rotiert sind,

Fig. 3 einen Mehrschichtverbundwerkstoff in schematischer und perspektivischer Darstellung aus sechs übereinanderliegenden Lagen Faserverbundwerkstoff, wobei die innenliegenden Lagen gleich orientiert sind und ihre Orientierung relativ zu den außenliegenden Lagen Faserverbundwerkstoff um 90° rotiert sind,

Figur 1 zeigt einen Ausschnitt eines Mehrschichtverbundwerkstoffs 1 aus drei übereinanderliegenden Lagen Faserverbundwerkstoff 2, 3, wobei die innenliegende Lage Faserverbundwerkstoff 2 relativ zu den außenliegenden Lagen 3 Faserverbundwerkstoff um 90° rotiert ist. Die Ausschnittsvergrößerung in Figur 1 zeigt, dass jede der Lagen 2, 3 des Mehrschichtverbundwerkstoffs Endlosfasern 4 enthält, die innerhalb der jeweiligen Lage unidirektional ausgerichtet sind und in auf Polycarbonat basierenden Kunststoff 5 eingebettet sind. Die Orientierung der jeweiligen Lage Faserverbundwerkstoff 2,3 wird durch die Orientierung der darin enthaltenen unidirektional ausgerichteten Endlosfasern 4 bestimmt. Die Endlosfasern 4 erstrecken sich über die gesamte Länge bzw. Breite des Mehrschichtverbundwerkstoffs.

Die Lagen 2, 3 sind vollflächig miteinander verbunden.

Der Mehrschichtverbundwerkstoff 1 gemäß Figur 2 besteht aus fünf übereinanderliegenden Lagen Faserverbundwerkstoff 2, 3, wobei die innenliegenden Lagen Faserverbundwerkstoff 2 gleich orientiert sind und ihre Orientierung relativ zu den außenliegenden Lagen Faserverbundwerkstoff 3 um 90° rotiert sind.

Der Mehrschichtverbundwerkstoff 1 gemäß Figur 3 besteht aus sechs übereinanderliegenden Lagen Faserverbundwerkstoff 2, 3, wobei die innenliegenden Lagen Faserverbundwerkstoff 2 gleich orientiert sind und ihre Orientierung relativ zu den außenliegenden Lagen Faserverbundwerkstoff 3 um 90° rotiert sind.

**Ausführungsbeispiele**

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

Ausgangsstoffe:

- **A-1**: Lineares Polycarbonat auf Basis von Bisphenol A mit einer Schmelze-Volumenfließrate MVR von 17 $cm^3$/(10 min) (gemäß ISO 1133:2012-03, bei einer Prüftemperatur 250°C und 2,16 kg Belastung).
- **A-2:** Lineares Polycarbonat auf Basis von Bisphenol A mit einer Schmelze-Volumenfließrate MVR von 19 $cm^3$/(10 min) (gemäß ISO 1133:2012-03, bei einer Prüftemperatur 300°C und 1,2 kg Belastung).
- **A-3:** Makrolon® 2408-Pulver der Covestro Deutschland AG. Lineares Polycarbonat auf Basis von Bisphenol A mit einer Schmelze-Volumenfließrate MVR von 19 $cm^3$/(10 min) (gemäß ISO 1133:2012-03, bei einer Prüftemperatur 300°C und 1,2 kg Belastung).
- **A-4:** Lineares Polycarbonat auf Basis von Bisphenol A mit einer Schmelze-Volumenfließrate MVR von 6 $cm^3$/(10 min) (gemäß ISO 1133:2012-03, bei einer Prüftemperatur 300°C und 1,2 kg Belastung).
- **A-5:** Makrolon® 3108-Pulver der Covestro Deutschland AG. Lineares Polycarbonat auf Basis von Bisphenol A mit einer Schmelze-Volumenfließrate MVR von 6 $cm^3$/(10 min) (gemäß ISO 1133:2012-03, bei einer Prüftemperatur von 300°C und 1,2 kg Belastung).
- **A-6:** Lineares Polycarbonat auf Basis von Bisphenol A mit einer Schmelze-Volumenfließrate MVR von 9 $cm^3$/(10 min) (gemäß ISO 1133:2012-03, bei einer Prüftemperatur 300°C und 1,2 kg Belastung).
- **B:** Amosil FW600, Quarzglas (fused silica) der Firma Quarzwerke GmbH, Deutschland ; $D_{50}$ = 4 $\mu$m, $D_{90}$ = 10 $\mu$m, $D_{100}$ = 13 $\mu$m.
- **C:** Phenoxyphosphazen Rabitle FP-110 der Firma Fushimi Pharmaceutical, Japan.
- **D:** Bisphenol-A-bis(diphenylphosphat) der Firma Remy GmbH & Co. KG, Deutschland.
- **E:** Kaliumperfluorbutansulfonat der Firma Lanxess AG, Leverkusen.
- **Fasern:** Carbonfaser Pyrofil TRH50 60M der Firma Mitsubishi Rayon Co., Ltd. mit einem Einzelfilamentdurchmesser von 7 $\mu$m, einer Dichte von 1,81 g/$cm^3$ und einem Zugmodul von 250 GPa. Geliefert werden 60000 Einzelfilamente in einem Faserbündel (Roving) als Endlosspule.

Herstellung der Zusammensetzungen

Die in den folgenden Beispielen beschriebenen Polycarbonatzusammensetzungen wurden auf einem Extruder Evolum EV32HT der Firma Clextral-Frankreich mit einem Schneckendurchmesser von 32 mm durch Compoundierung hergestellt. Als Schneckenbesatz kam dabei L7-8,2 bei einem Durchsatz von 40-70 kg/h zum Einsatz. Die Drehzahl betrug 200-300 U/min bei einer Massetemperatur von 240-320 °C (je nach Zusammensetzung).

Das Granulat der aufgeführten Versuchsformulierungen wurde in einem Trockenlufttrockner der Firma Labotek, Typ DDM180 für 4 Stunden bei 80°C getrocknet.

Herstellung der Lagen Faserverbundwerkstoff/des Mehrschichtverbundwerkstoffs:

Herstellung einer Faserverbundwerkstofflage

Die Herstellung der Verbundwerkstofflagen erfolgte in einer Versuchsanordnung wie in DE 10 2011 005 462 B3 (WO 2012/123302 A1) beschrieben.

Die Rovings der oben beschriebenen Fasern wurden unter konstanter Spannung von Spulen eines Spulengatters abgerollt und durch eine Spreizvorrichtung zu einem 60 mm breiten Roh-Faserband von Einzelfilamenten torsionsfrei aufgespreizt.

Das Roh-Faserband wurde auf eine Temperatur oberhalb der Glasübergangstemperatur der jeweiligen Granulate erwärmt.

Das Granulat der jeweiligen Versuchsformulierungen wurde in einem Extruder der Firma Maschinenbau Heilsbronn GmbH, Typ Ecoline 30x25d aufgeschmolzen und über Schmelzekanäle zu Breitschlitzdüsen geführt, welche oberhalb sowie unterhalb und quer zur Laufrichtung des Faserbandes angeordnet waren. Die Temperatur in den Schmelzezonen des Extruders betrug ca. 280°C bis 300°C. Nach Austritt aus den Breitschlitzdüsen traf die jeweilige Schmelze auf das temperierte Roh-Faserband, wobei eine Beaufschlagung des Roh-Faserbands mit der Schmelze beidseitig erfolgte. Das mit Schmelze beaufschlagte Roh-Faserband wurde über eine permanent erwärmte Platte temperiert weiter zu wiederum temperierten Vibrationsschuhen transportiert. Durch eine Druck-Vibrations-Scher-Beaufschlagung mittels der Vibrationsschuhe, wie in der DE 10 2011 005 462 B3 beschrieben, wurden die jeweiligen Schmelzen in das Roh-Faserband eingebracht. Es resultierten 60 mm breite Verbundwerkstofflagen, welche nach dem Passieren von Kühlwalzen aufgerollt wurden.

Assemblierung der Verbundwerkstofflagen - Teil 1

Die 60 mm breiten Verbundwerkstofflagen wurden durch eine Versuchsanordnung wie in DE 10 2011 090 143 A1 beschrieben an ihren Kanten zu breiteren Tapes einer Breite von 480 mm verschweißt, wobei alle Einzelfilamente weiterhin in die gleiche Richtung orientiert waren. Die konsolidierten Verbundwerkstofflagen wurden erneut aufgerollt.

Ein Teil der assemblierten Tapes aus Teil 1 wurde mit einer Schlagschere orthogonal zur Faserorientierung in quadratische Abschnitte unterteilt.

Assemblierung der Verbundwerkstofflagen - Teil 2

Diese quadratischen Abschnitte wurden an ihren ursprünglichen Außenkanten mit einem Schweißbalken zu einer fortlaufenden Verbundwerkstofflage konsolidiert, wobei durch diesen Prozess eine faserverstärkte Verbundwerkstofflage resultierte, in der die Faserorientierung für alle Filamente gleich war und in Bezug zur Abrollrichtung der Verbundwerkstofflage um 90° gedreht war. Die derart konsolidierte Verbundwerkstofflage wurde aufgerollt.

Herstellung der Organosheets

Alle nachfolgend untersuchten Organosheets bestanden aus 4 Faserverbundwerkstofflagen, wobei 2 außenliegende Faserverbundwerkstofflagen mit gleicher Faserorientierung und 2 innenliegende Faserverbundwerkstofflagen mit gleicher Faserorientierung vorlagen, wobei die Faserorientierung der innenliegenden Faserverbundwerkstofflagen um 90° gedreht war in Bezug zur Faserorientierung der außenliegenden Faserverbundwerkstofflagen.

Faserverbundwerkstofflagen mit entsprechender Orientierung wurden hierzu in zuvor beschriebener Reihenfolge abgerollt und aufeinander gelegt. Der Stapel wurde danach einer Intervall-Heizpresse PLA 500 der BTS Verfahrenstechnik GmbH zugeführt und bei einer Temperatur oberhalb der Glasübergangstemperatur der Imprägnierungsformulierungen zu einem Organosheet verpresst.

Der flächig anliegende Pressdruck betrug hierbei 10 bar. Die Temperatur in der Heizzone lag bei 280°C und die Temperatur in der Kühlzone lag bei 100°C. Des Weiteren lag der Vorschub je Takt bei 30 mm und die Taktzeit bei 10 Sek.

Es ergaben sich Proben mit Gesamtdicken von 0,7 mm. Die eingesetzten Faserverbundwerkstofflagen zur Herstellung der Organosheets waren dementsprechend 175 $\mu$m dick. Der Faservolumengehalt der Verbundwerkstofflagen belief sich auf ca. 50 Vol.-% je Faserverbundwerkstofflage.

Aus den derart hergestellten Organosheets wurden mit einer Tischkreissäge Diadisc 5200 der Firma Mutronic Proben herauspräpariert. Hierbei wurden Proben parallel zur Faserorientierung in den außenliegenden Lagen, nachfolgend als 0° Orientierung bezeichnet, sowie quer zur Faserorientierung in den außenliegenden Lagen, nachfolgend als 90° Orientierung bezeichnet, präpariert.

Methoden:

Die Bestimmung des **Schmelze-Volumenfließrate** (MVR) erfolgte nach ISO 1133:2012-03 (bei einer Prüftemperatur von 270°C bzw. 300 °C, Masse 1,2 kg) mit dem Gerät Zwick 4106 der Firma Zwick Roell. Dabei steht die Abkürzung MVR für die Anfangs-Schmelze-Volumenfließrate (nach 7 Minuten Vorwärmzeit), die Abkürzung IMVR20' für die Schmelze-Volumenfließrate nach 20 min.

Die Bestimmung der **Schmelzeviskosität** erfolgte in Anlehnung an ISO 11443:2005 mit dem Gerät Visco-Robo 45.00 der Fa. Göttfert.

Die **Dickenbestimmung der nach dem Fügen resultierenden Mehrschichtverbundwerkstoffe** erfolgte mit einer handelsüblichen Bügelmessschraube. Als Ergebnis ist der arithmetische Mittelwert von 5 Einzelmessungen an unterschiedlichen Positionen angegeben.

Das **Brandverhalten** wurde nach UL94 V an Stäben der Abmessung 127 mm x 12,7 mm x Organosheet-Dicke [mm] gemessen. Es wurden hierzu Mehrschichtverbundwerkstoffe aus vier Lagen Faserverbundwerkstoff vermessen. Das Fasermaterial waren unidirektional orientierte Carbonfasern wie vorstehend beschrieben.

Zusammensetzungen und Ergebnisse:

**Tabelle 1: Beispiele**

| **Rezeptur** | | **B1** | **B2** | **B3** | **B4** | **B5** | **V1** |
|---|---|---|---|---|---|---|---|
| **A-1** | Gew.-% | 60,00 | | | | 50,00 | 51,00 |
| **A-2** | Gew.-% | 20,00 | | | | 20,00 | 20,00 |
| **A-3** | Gew.-% | | 67,00 | | 53,00 | | |
| **A-4** | Gew.-% | | 10,00 | 20,00 | 20,00 | | |
| **A-5** | Gew.-% | | | | | | |
| **A-6** | Gew.-% | | | 53,00 | | | |
| **B** | Gew.-% | 10,00 | 8,00 | 10,00 | 10,00 | 10,00 | 12,00 |
| **C** | Gew.-% | 5,00 | 8,00 | 10,00 | 10,00 | 10,00 | 10,00 |
| **D** | Gew.-% | 5,00 | 7,00 | 7,00 | 7,00 | 10,00 | 7,00 |
| **E** | Gew.-% | | | | | | |
| | | | | | | | |
| **Prüfungen** | | | | | | | |
| **MVR (300°C, 1,2 kg)** | $cm^3$/(10 min) | 14,2 | 55,9 | n.m. | 61,4 | 26,6 | 23,9 |
| **IMVR20‘ (300°C, 1,2 kg)** | | 14,8 | 61,8 | n.m. | 65,4 | 34,0 | 25,4 |
| **ΔMVR/IMVR20‘ (300°C, 1,2 kg)** | | 0,6 | 5,9 | n.m. | 4,0 | 7,4 | 1,5 |
| **MVR (270°C, 1,2 kg)** | $cm^3$/(10 min) | - | 24,9 | 63,7 | 27,7 | 12,0 | 10,0 |
| **IMVR20‘ (270°C, 1,2 kg)** | | - | 25,7 | 63,0 | 28,3 | 8,7 | 10,7 |
| **ΔMVR/IMVR20‘ (270°C, 1,2 kg)** | | - | 0,8 | -0,7 | 0,6 | -3,3 | 0,7 |
| **Schmelzeviskosität bei 260°C** | | | | | | | |
| eta 50 | Pa·s | - | 234 | 94 | 209 | 427 | 564 |

| | | | | | | | |
|---|---|---|---|---|---|---|---|
| eta 100 | Pa·s | - | 229 | 93 | 208 | 407 | 558 |
| eta 200 | Pa·s | - | 224 | 92 | 207 | 370 | 518 |
| eta 500 | Pa·s | - | 200 | 89 | 186 | 309 | 415 |
| eta 1000 | Pa·s | - | 178 | 83 | 161 | 243 | 317 |
| eta 1500 | Pa·s | - | 150 | 77 | 142 | 202 | 259 |
| eta 5000 | Pa·s | - | 85 | 55 | 79 | 97 | 117 |
| | | | | | | | |
| **UL94V(Organosheet, 0,7 mm, 0°)** | | | | | | | |
| (48h, 23°C) | | V0 | V0 | V0 | V0 | V0 | * |
| (7d, 70°C) | | V0 | V0 | V0 | V0 | V0 | * |
| Gesamtbewertung | | V0 | V0 | V0 | V0 | V0 | * |
| | | | | | | | |
| **UL94V an (Organosheet, 0,7 mm, 90°)** | | | | | | | |
| (48h, 23°C) | | V0 | n.b. | V0 | V0 | V0 | * |
| (7d, 70°C) | | V0 | n.b. | V0 | V0 | V0 | * |
| Gesamtbewertung | | V0 | n.b. | V0 | V0 | V0 | * |

**Fortsetzung Tabelle 1:**

| **Rezeptur** | | **V2** | **V3** | **V4** |
|---|---|---|---|---|
| **A-1** | Gew.-% | 58,00 | | |
| **A-2** | Gew.-% | 20,00 | | |
| **A-3** | Gew.-% | | 64,87 | 61,87 |
| **A-4** | Gew.-% | | 20,00 | 20,00 |
| **A-5** | Gew.-% | | | |
| **A-6** | Gew.-% | | | |
| **B** | Gew.-% | 10,00 | 10,00 | 10,00 |

| | | | | |
|---|---|---|---|---|
| **C** | Gew.-% | 10,00 | | 3,00 |
| **D** | Gew.-% | 2,00 | 5,00 | 5,00 |
| **E** | Gew.-% | | 0,13 | 0,13 |
| | | | | |
| **Prüfungen** | | | | |
| **MVR (300°C, 1,2 kg)** | $cm^3/(10$ min) | 16,8 | 25,1 | 33,0 |
| **IMVR20‘ (300°C, 1,2 kg)** | | 19,1 | 27,2 | 37,7 |
| **ΔMVR/IMVR20‘ (300°C, 1,2 kg)** | | 2,3 | 2,1 | 4,7 |
| **MVR (270°C, 1,2 kg)** | $cm^3/(10$ min) | 6,8 | 9,7 | 13,2 |
| **IMVR20‘ (270°C, 1,2 kg)** | | 5,4 | 10,0 | 14,2 |
| **ΔMVR/IMVR20‘ (270°C, 1,2 kg)** | | -1,4 | 0,3 | 1,0 |
| **Schmelzeviskosität bei 260°C** | | | | |
| eta 50 | Pa·s | 832 | 758 | 550 |
| eta 100 | Pa·s | 798 | 709 | 512 |
| eta 200 | Pa·s | 714 | 653 | 467 |
| eta 500 | Pa·s | 550 | 545 | 403 |
| eta 1000 | Pa·s | 401 | 421 | 327 |
| eta 1500 | Pa·s | 317 | 340 | 276 |
| eta 5000 | Pa·s | 137 | 153 | 130 |
| | | | | |
| **UL94V(Organosheet, 0,7 mm, 0°)** | | | | |
| (48h, 23°C) | | * | n. best. | V0 |
| (7d, 70°C) | | * | n. best. | V1 |
| Gesamtbewertung | | * | n. best. | V1 |
| | | | | |

| | | | | |
|---|---|---|---|---|
| **UL94V an (Organosheet, 0,7 mm, 90°)** | | | | |
| (48h, 23°C) | | * | n. best. | V1 |
| (7d, 70°C) | | * | n. best. | n. best. |
| Gesamtbewertung | | * | n. best. | n. best. |

*: keine Verarbeitung als Matrixmaterial möglich n.m.: nicht messbar

n.b.: nicht bestimmt

n. best.: nicht bestanden

Die erfindungsgemäßen Beispiele weisen eine gute Schmelzestabilität auf. Die Ergebnisse zeigen, dass es nur mit den erfindungsgemäß verwendeten Zusammensetzungen möglich ist, eine V0-Klassifizierung bei guter Verarbeitbarkeit und guter Schmelzestabilität zu erreichen; die Zusammensetzungen gemäß den Vergleichsbeispielen liefern keine Organosheets, welche eine V0-Klassifizierung erreichen bzw. stellen aufgrund mangelhafter Verarbeitbarkeit kein geeignetes Matrixmaterial für die Herstellung von Organosheets dar.

## Patentansprüche

**1.** Faserverbundwerkstoff, umfassend mindestens eine Lage Fasermaterial, eingebettet in eine Zusammensetzung, enthaltend

A) mindestens 55 Gew.-% mindestens eines aromatischen Polycarbonats,
B) 5 Gew.-% bis 11 Gew.-% mindestens eines Quarzes und/oder Quarzglases,
C) 4 Gew.-% bis 15 Gew.-% mindestens eines cyclischen Phosphazens gemäß Formel (1)

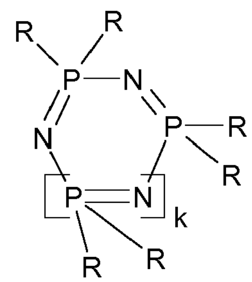

(1),

wobei

R jeweils gleich oder verschieden ist und für einen Aminrest, einen jeweils gegebenenfalls halogenierten $C_1$- bis $C_8$-Alkylrest, $C_1$- bis $C_8$-Alkoxyrest, jeweils gegebenenfalls durch Alkyl und/oder Halogen substituierten $C_5$- bis $C_6$-Cycloalkylrest, jeweils gegebenenfalls durch Alkyl, und/oder Halogen und/oder Hydroxy-substituierten $C_6$- bis $C_{20}$-Aryloxyrest, jeweils gegebenenfalls durch Alkyl, und/oder Halogen substituierten $C_7$- bis $C_{12}$-Aralkylrest oder einen Halogen-Rest oder einen OH-Rest steht,
k für eine ganze Zahl von 1 bis 10 steht,

D) 3 bis 12 Gew.-% mindestens einer Phosphorverbindung der allgemeinen Formel (2)

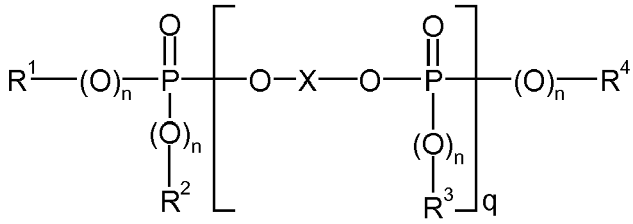

(2),

worin

$R^1$, $R^2$, $R^3$ und $R^4$ unabhängig voneinander für einen $C_1$- bis $C_8$-Alkylrest, jeweils gegebenenfalls halogeniert und jeweils verzweigt oder unverzweigt, und/oder $C_5$- bis $C_6$-Cycloalkylrest, $C_6$- bis $C_{20}$-Arylrest oder $C_7$- bis $C_{12}$-Aralkylrest, jeweils gegebenenfalls durch verzweigtes oder unverzweigtes Alkyl und/oder Halogen substituiert, stehen,
n unabhängig voneinander 0 oder 1,
q einen ganzzahligen Wert von 0 bis 30,
X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann,

bedeuten.

**2.** Faserverbundwerkstoff gemäß Anspruch 1, wobei das Fasermaterial ausgewählt ist aus der Gruppe, bestehend aus Carbonfasern, Glasfasern, Basaltfasern und deren Mischungen.

**3.** Faserverbundwerkstoff gemäß Anspruch 1 oder 2, wobei das Fasermaterial Endlosfasern, ein Gewebe oder Gewirke sind/ist.

**4.** Faserverbundwerkstoff gemäß einem der vorhergehenden Ansprüche, wobei das Fasermaterial Endlosfasern sind und die Endlosfasern unidirektional ausgerichtet sind.

**5.** Faserverbundwerkstoff gemäß einem der vorhergehenden Ansprüche, wobei die Zusammensetzung

A) mindestens 65 Gew.-% mindestens eines aromatischen Polycarbonats,
B) 6 Gew.-% bis 11 Gew.-% mindestens eines Quarzes und/oder Quarzglases,
C) 4,5 Gew.-% bis 12 Gew.-% mindestens eines cyclischen Phosphazens gemäß Formel (1),
D) 4 bis 11 Gew.-% mindestens einer Phosphorverbindung der allgemeinen Formel (2)

enthält.

**6.** Faserverbundwerkstoff gemäß einem der vorhergehenden Ansprüche, wobei die Zusammensetzung aus

A) 65 Gew.-% bis 82 Gew.-% mindestens eines aromatischen Polycarbonats,
B) 8 Gew.-% bis 10 Gew.-% mindestens eines Quarzes und/oder Quarzglases,
C) 5 Gew.-% bis 10 Gew.-% mindestens eines cyclischen Phosphazens gemäß Formel (1),
wobei als cyclisches Phosphazen gemäß Komponente C mindestens Phenoxyphosphazen enthalten ist,
D) 5 bis 10 Gew.-% mindestens einer Phosphorverbindung der allgemeinen Formel (2)
wobei als Phosphorverbindung der Formel (2) nur die Phosphorverbindung der Formel (2b)

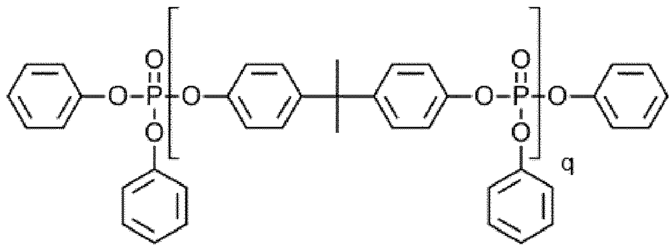

(2b)

mit einem mittleren q-Wert q = 1,0 bis 1,2 enthalten ist,
E) 0 bis 10 Gew.-% eines oder mehrerer weiterer, von den Komponenten B, C und D verschiedener Additive, ausgewählt aus der Gruppe, bestehend aus UV-Stabilisatoren, IR-Stabilisatoren, Antioxidantien, Entformungsmitteln, Fließhilfsmitteln, Antistatika, Schlagzähmodifikatoren, Farbmitteln, weiteren Füllstoffen, Thermostabilisatoren, Antitropfmitteln, weiteren Flammschutzmitteln, Antistatika,

besteht
und das Fasermaterial undirektional orientierte Endlos-Carbonfasern umfasst.

**7.** Faserverbundwerkstoff gemäß Anspruch 6, wobei als cyclisches Phosphazen der Formel (1) ausschließlich Phenoxyphosphazen enthalten ist und der Anteil cyclisches Phosphazen mit k = 1 50 bis 98 mol-%, bezogen auf die Gesamtmenge an cyclischem Phosphazen der Formel (1), beträgt.

**8.** Faserverbundwerkstoff gemäß einem der vorhergehenden Ansprüche, wobei Komponente B Quarzglas mit einem $D_{50}$, bestimmt nach bestimmt nach ISO 13320:2009, von 2,5 bis 8,0 μm ist.

**9.** Mehrschichtverbundwerkstoff, umfassend mindestens zwei übereinander liegende Lagen Faserverbundwerkstoff gemäß einem der vorhergehenden Ansprüche.

**10.** Mehrschichtverbundwerkstoff, umfassend mindestens drei übereinander liegende Lagen Faserverbundwerkstoff gemäß einem der vorhergehenden Ansprüche, welche relativ zueinander definiert werden als zwei außenliegende Lagen Faserverbundwerkstoff und mindestens eine innenliegende Lage Faserverbundwerkstoff.

**11.** Mehrschichtverbundwerkstoff gemäß Anspruch 10, wobei die innenliegenden Lagen Faserverbundwerkstoff im Wesentlichen gleich orientiert sind und ihre Orientierung relativ zu den außenliegenden Lagen Faserverbundwerkstoff um 30° bis 90° rotiert ist, wobei die Orientierung einer Lage Faserverbundwerkstoff durch die Orientierung der darin enthaltenen, unidirektional ausgerichteten Fasern bestimmt wird.

**12.** Mehrschichtverbundwerkstoff gemäß einem der Ansprüche 9 bis 11, aufweisend eine Wandstärke von weniger als 3 mm.

**13.** Verfahren zur Herstellung einer Lage Faserverbundwerkstoff gemäß einem der Ansprüche 1 bis 8, wobei eine geschmolzene Zusammensetzung, enthaltend

A) mindestens 55 Gew.-% mindestens eines aromatischen Polycarbonats,
B) 5 Gew.-% bis 11 Gew.-% mindestens eines Quarzes und/oder Quarzglases,
C) 4 Gew.-% bis 15 Gew.-% mindestens eines cyclischen Phosphazens gemäß Formel (1)

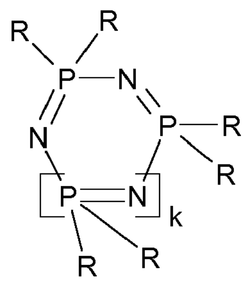

(1),

wobei

R jeweils gleich oder verschieden ist und für einen Aminrest, einen jeweils gegebenenfalls halogenierten $C_1$- bis $C_8$-Alkylrest, $C_1$- bis $C_8$-Alkoxyrest, jeweils gegebenenfalls durch Alkyl und/oder Halogen substituierten $C_5$- bis $C_6$-Cycloalkylrest, jeweils gegebenenfalls durch Alkyl, und/oder Halogen und/oder Hydroxy-substituierten $C_6$- bis $C_{20}$-Aryloxyrest, jeweils gegebenenfalls durch Alkyl, und/oder Halogen substituierten $C_7$- bis $C_{12}$-Aralkylrest oder einen Halogen-Rest oder einen OH-Rest steht,
k für eine ganze Zahl von 1 bis 10 steht,

D) 3 bis 12 Gew.-% mindestens einer Phosphorverbindung der allgemeinen Formel (2)

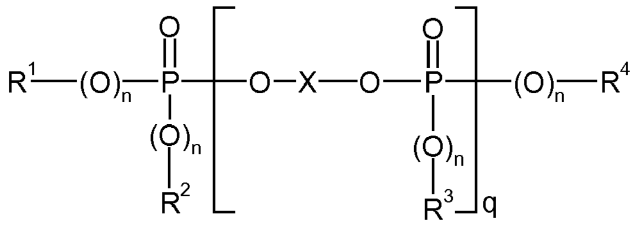

(2),

worin

$R^1$, $R^2$, $R^3$ und $R^4$ unabhängig voneinander für einen $C_1$- bis $C_8$-Alkylrest, jeweils gegebenenfalls halogeniert und jeweils verzweigt oder unverzweigt, und/oder $C_5$- bis $C_6$-Cycloalkylrest, $C_6$- bis $C_{20}$-Arylrest oder $C_7$- bis $C_{12}$-Aralkylrest, jeweils gegebenenfalls durch verzweigtes oder unverzweigtes Alkyl und/oder Halogen substituiert, stehen,
n unabhängig voneinander 0 oder 1,
q einen ganzzahligen Wert von 0 bis 30,
X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann,
bedeuten,

unter Druck-Scher-Vibrationsbeaufschlagung auf ein über die Glasübergangstemperatur des Polycarbonats vorgeheiztes Roh-Faserband aus Fasermaterial aufgetragen wird.

**14.** Verfahren zur Herstellung eines Mehrschichtverbundwerkstoffes gemäß einem der Ansprüche 9 bis 12, umfassend folgende Schritte:

- Bereitstellen mindestens einer innenliegenden Lage Faserverbundwerkstoff und zweier außenliegender Lagen Faserverbundwerkstoff, wobei die Herstellung der einzelnen Lagen Faserverbundwerkstoff durch Auftragen einer geschmolzenen Zusammensetzung, enthaltend

A) mindestens 55 Gew.-% mindestens eines aromatischen Polycarbonats,
B) 5 Gew.-% bis 11 Gew.-% mindestens eines Quarzes und/oder Quarzglases,
C) 4 Gew.-% bis 15 Gew.-% mindestens eines cyclischen Phosphazens gemäß Formel (1)

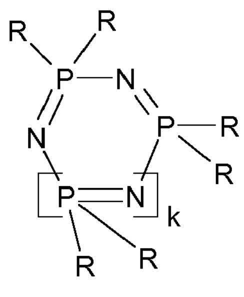

(1),

wobei

R jeweils gleich oder verschieden ist und für einen Aminrest, einen jeweils gegebenenfalls halogenierten $C_1$- bis $C_8$-Alkylrest, $C_1$- bis $C_8$-Alkoxyrest, jeweils gegebenenfalls durch Alkyl und/oder Halogen substituierten $C_5$- bis $C_6$-Cycloalkylrest, jeweils gegebenenfalls durch Alkyl, und/oder Halogen und/oder Hydroxy-substituierten $C_6$- bis $C_{20}$-Aryloxyrest, jeweils gegebenenfalls durch Alkyl, und/oder Halogen substituierten $C_7$- bis $C_{12}$-Aralkylrest oder einen Halogen-Rest oder einen OH-Rest steht,
k für eine ganze Zahl von 1 bis 10 steht,

D) 3 bis 12 Gew.-% mindestens einer Phosphorverbindung der allgemeinen Formel (2)

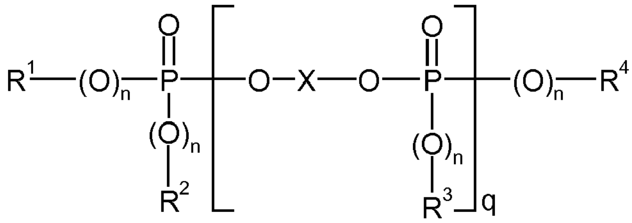

(2),

worin

$R^1$, $R^2$, $R^3$ und $R^4$ unabhängig voneinander für einen $C_1$- bis $C_8$-Alkylrest, jeweils gegebenenfalls halogeniert und jeweils verzweigt oder unverzweigt, und/oder $C_5$- bis $C_6$-Cycloalkylrest, $C_6$- bis $C_{20}$-Arylrest oder $C_7$- bis $C_{12}$-Aralkylrest, jeweils gegebenenfalls durch verzweigtes oder unverzweigtes Alkyl und/oder Halogen substituiert, stehen,
n unabhängig voneinander 0 oder 1,
q einen ganzzahligen Wert von 0 bis 30,
X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann, bedeuten.

auf ein über die Glasübergangstemperatur des Polycarbonats vorgeheiztes Roh-Faserband aus Fasermaterial, wobei die Zusammensetzung unter Druck-Scher-Vibrationsbeaufschlagung auf das Roh-Faserband aufgetragen wird,
- Schichten der Lagen aus Faserverbundwerkstoff in der gewünschten Orientierung zueinander, bezogen auf die Orientierung des Fasermaterials,
- Verbinden der geschichteten Lagen aus Faserverbundwerkstoff zum Mehrschichtverbundwerkstoff.

**15.** Gehäuseteil oder Bauteil umfassend einen oder aus einem Faserverbundwerkstoff gemäß einem der Ansprüche 1 bis 8 oder umfassend einen/aus einem Mehrschichtverbundwerkstoff gemäß einem der Ansprüche 9 bis 12.

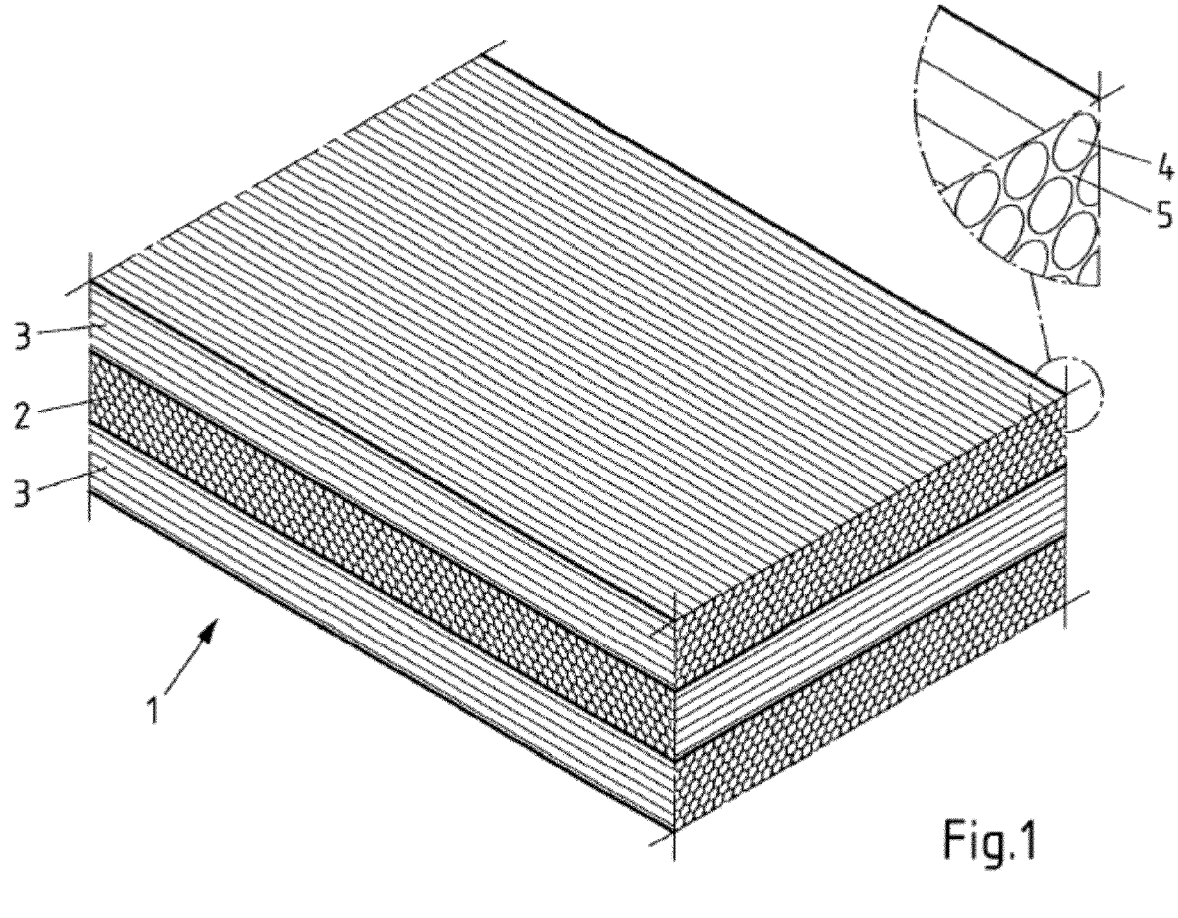


Fig.1

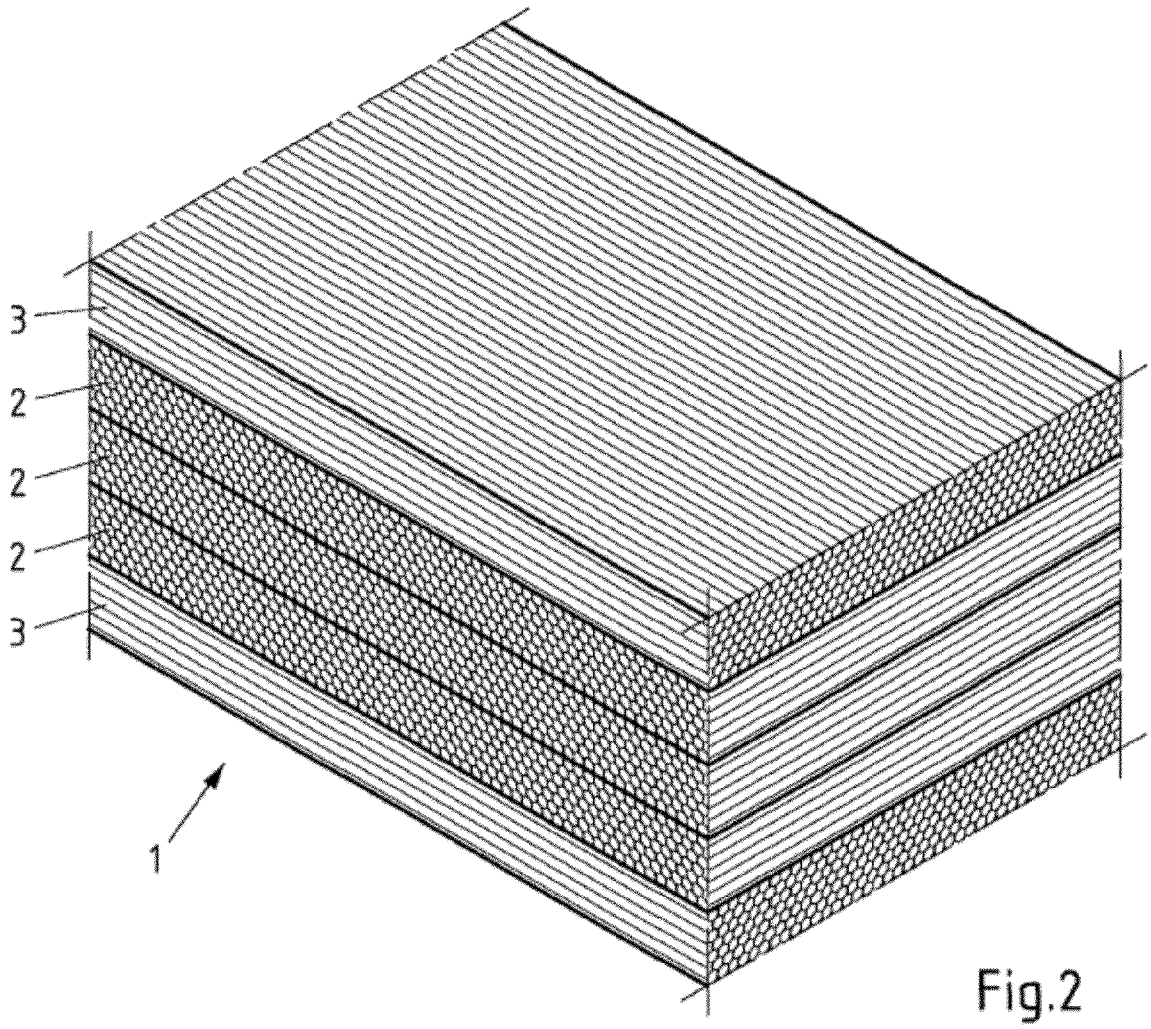


Fig.2

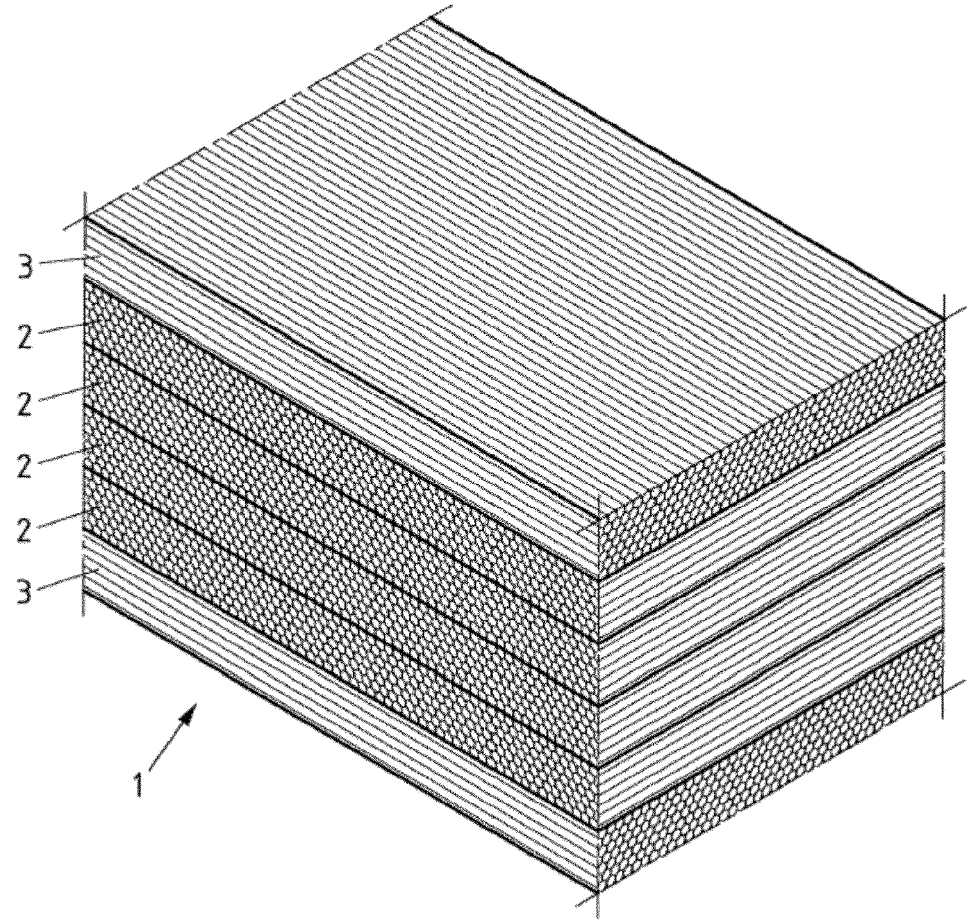


Fig. 3

Europäisches Patentamt
European Patent Office
Office européen des brevets

# EUROPÄISCHER RECHERCHENBERICHT

Nummer der Anmeldung
EP 17 20 9589

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2015/052114 A1 (BAYER MATERIALSCIENCE AG [DE]) 16. April 2015 (2015-04-16)<br>* Zusammenfassung; Ansprüche 1,5,6,12 *<br>* Seite 5, Zeilen 1-16 *<br>* Seite 12, Zeile 1 - Seite 14, Zeile 15 *<br>* Seite 17, Zeile 11 - Seite 19, Zeile 21 *<br>----- | 1-15 | INV.<br>C08J5/10<br>B32B27/36<br>C08K3/34<br>C08K5/521<br>C08K5/523<br>C08K5/5399 |
| Y | WO 2013/045552 A1 (BAYER IP GMBH [DE]) 4. April 2013 (2013-04-04)<br>* Zusammenfassung; Anspruch 1 *<br>* Seite 6, Zeile 27 - Seite 7, Zeile 14 *<br>* Seite 9, Zeile 6 *<br>* Seite 10, Zeilen 8-14 *<br>* Seite 14, Zeilen 5-12 *<br>----- | 1-15 | |
| | | | RECHERCHIERTE SACHGEBIETE (IPC) |
| | | | B32B<br>C08J<br>C08K |

Der vorliegende Recherchenbericht wurde für alle Patentansprüche erstellt

1

| Recherchenort | Abschlußdatum der Recherche | Prüfer |
|---|---|---|
| München | 12. Juni 2018 | Schütte, Maya |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 17 20 9589

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2018

| Im Recherchenbericht angeführtes Patentdokument | Datum der Veröffentlichung | Mitglied(er) der Patentfamilie | Datum der Veröffentlichung |
|---|---|---|---|
| WO 2015052114 A1 | 16-04-2015 | CN 105612202 A | 25-05-2016 |
| | | EP 3055348 A1 | 17-08-2016 |
| | | JP 2016539204 A | 15-12-2016 |
| | | KR 20160067159 A | 13-06-2016 |
| | | US 2016257794 A1 | 08-09-2016 |
| | | WO 2015052114 A1 | 16-04-2015 |
| WO 2013045552 A1 | 04-04-2013 | CN 103874734 A | 18-06-2014 |
| | | EP 2760932 A1 | 06-08-2014 |
| | | ES 2563229 T3 | 11-03-2016 |
| | | KR 20140069242 A | 09-06-2014 |
| | | US 2014243467 A1 | 28-08-2014 |
| | | WO 2013045552 A1 | 04-04-2013 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2886305 A1
- WO 2012123302 A1
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A1
- WO 2015052106 A2
- WO 2004063249 A1
- WO 200105866 A1
- US 5340905 A
- US 5097002 A
- US 5717057 A
- EP 728811 A2
- DE 1961668 A
- WO 9740092 A1
- EP 0363608 A1
- EP 0640655 A2
- DE 102011005462 B3
- WO 2013098224 A1
- DE 102011090143 A1


### In der Beschreibung aufgeführte Nicht-Patentliteratur


- **H. SCHNELL.** Chemistry and Physics of Polycarbonates. Interscience Publishers, 1964, 28, , 102
- **D.G. LEGRAND ; J.T. BENDLER.** Handbook of Polycarbonate Science and Technology. Marcel Dekker, 2000, 72ff
- *Ullmanns Enzyklopädie der technischen Chemie,* 1979, vol. 18, 301 ff
- **HOUBEN-WEYL.** *Methoden der organischen Chemie,* vol. 12/1, 43
- *Beilstein,* vol. 6, 177
- **JOHN MURPHY.** Additives for Plastic Handbook. Elsevier, 1999
- Plastics Additives Handbook. Hans Zweifel, 2001
- *CHEMICAL ABSTRACTS,* 29420-49-3